# EUROPEAN PATENT APPLICATION

(11) **EP 3 854 585 A1**
(43) Date of publication of application: **28.07.2021**
(21) Application number: 19863843.9
(22) Date of filing: 18.09.2019
(51) Int. Cl.: B32B 27/40, B05D 1/36, B05D 7/24, C09D 5/02, C09D 175/02

(54) **MULTILAYERED COATING FILM AND PRODUCTION METHOD THEREFOR**

(30) Priority: 21.09.2018 JP 2018177449
(71) Applicant: Asahi Kasei Kabushiki Kaisha, Tokyo 1000006 (JP)
(72) Inventor: MIWA, Yuichi, Tokyo 100-0006 (JP); INNAMI, Yu, Tokyo 100-0006 (JP)
(74) Representative: Strehl Schübel-Hopf & Partner
(86) International application number: PCT/JP2019/036521
(87) International publication number: WO 2020/059739

(57) **Abstract**

The present invention provides a coating film including a structure represented by formula (I)-1, a multilayer coating film including said coating film and a method for producing the same.

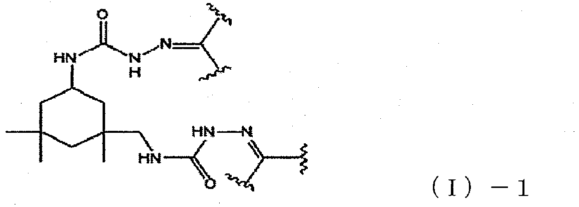

## Description

### TECHNICAL FIELD

The present invention relates to a multilayer coating film and a method for producing the same.

### BACKGROUND ART

In recent years, as a method for forming a coating film on an automobile body, a method for forming a multilayer coating film has been adopted in which an electrodeposition paint is applied, an intermediate coating paint is applied, an aqueous base-coating paint is applied, and the dilution medium is volatilized by preheating, thereafter a clear paint is applied, followed by baking and curing. A coating composition necessary for forming a coating film by this method is disclosed in Patent Document 1, and properties such as chipping resistance and water resistance can be exhibited.

### PRIOR ART LITERATURE

### Patent Documents

[Patent Document 1] PCT International Publication No. WO2007/126107
[Patent Document 2] PCT International Publication No. WO1996/17881
[Patent Document 3] Japanese Unexamined Patent Application, First Publication No. S57-198760
[Patent Document 4] Japanese Patent Granted Publication No. H4-001033
[Patent Document 5] Japanese Unexamined Patent Application, First Publication No. S53-135931

### DISCLOSURE OF INVENTION

### Problems to be Solved by the Invention

However, in the technique disclosed in Patent Document 1, the sagging resistance of the coating film and the yellowing resistance of the coating film at the time of baking (heat drying) were insufficient in some cases.

The present invention has been made in view of the above circumstances, and provides a multilayer coating film including a coating film having excellent sagging resistance and yellowing resistance at the time of baking, and a method for producing the same.

### Means for Solving the Problems

That is, the present invention includes the following aspects.
[1] A coating film comprising a structure represented by formula (I)-1. 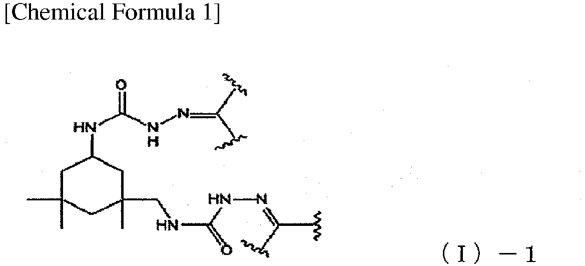
[2] The coating film according to [1], further comprising a structure represented by formula (II)-1. 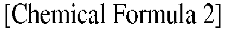 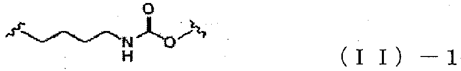
[3] The coating film according to [2], wherein a molar ratio between a carbonyl group (A) in the structure represented by formula (I)-1 and a carbonyl group (B) in the structure represented by formula (II)-1 is A/(A+B) = 0.2 to 0.9.
[4] The coating film according to [2] or [3], wherein the structure represented by formula (II)-1 is a structure represented by formula (II)-2. 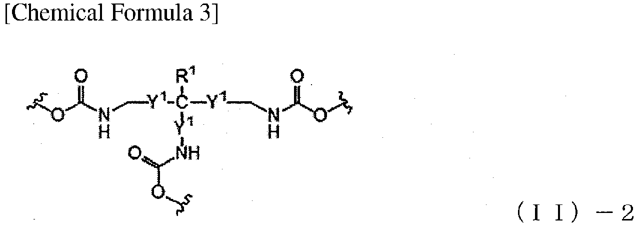 [In formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group.]
[5] The coating film according to [4], wherein a weight ratio between a structure (A') represented by formula (I)-1 and a structure (B') represented by formula (II)-2 is A'/(A'+ B') = 0.2 to 1.0 in terms of the compound represented by formula (I) and the compound represented by formula (II). 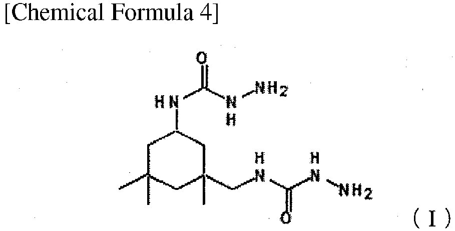 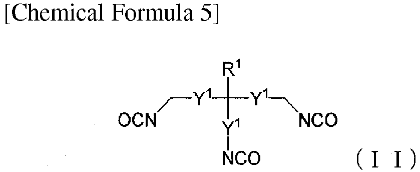 [In formula (II), a plurality of Y¹ are each independently a single bond or a divalent CI-20 hydrocarbon group optionally having an ester structure and/or an ether structure, the plurality of Y¹ may be the same or different, and R¹ is a hydrogen atom or a monovalent CI-12 hydrocarbon group.]
[6] A multilayer coating film, comprising a first coating film, a second coating film and a clear coating film which are laminated on an object to be coated, wherein
   the first coating film is a coating film obtained by curing a first aqueous coating composition,
   the second coating film is a coating film obtained by curing a second aqueous coating composition,
   the clear coating film is a coating film obtained by curing a clear coating composition, and
   at least one layer selected from the group consisting of the first coating film and the second coating film is the coating film defined in any one of [1] to [5].
[7] The multilayer coating film according to [6], wherein the clear coating film has a structure represented by formula (II)-2. 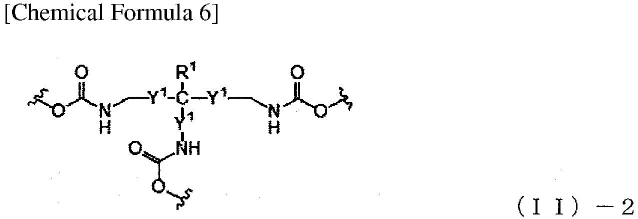 [In formula (II), a plurality of Y¹ are each independently a single bond or a divalent CI-20 hydrocarbon group optionally having an ester structure and/or an ether structure, the plurality of Y¹ may be the same or different, and R¹ is a hydrogen atom or a monovalent CI-12 hydrocarbon group.]
[8] An article comprising the multilayer coating film defined in [6] or [7].
[9] A method for producing a multilayer coating film, comprising
   step 1 of applying the first aqueous coating composition on a surface of an object to be coated to form a first coating film,
   step 2 of applying a second aqueous coating composition on the first coating film to form a second coating film,
   step 3 of applying a clear coating composition on the second coating film to form a clear coating film, and
   step 4 of simultaneously baking the first coating film, the second coating film, and the clear coating film formed on the object to be coated, in this order, wherein
   at least one aqueous coating composition selected from the group consisting of the first aqueous coating composition and the second aqueous coating composition contains a semicarbazide compound represented by formula (I). 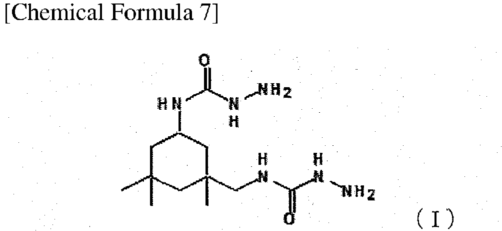
[10] The method according to [9], wherein at least one aqueous coating composition selected from the group consisting of the first aqueous coating composition and the second aqueous coating composition further contains a resin having a carbonyl group.
[11] The method according to [9] or [10], wherein said at least one aqueous coating composition selected from the group consisting of the first aqueous coating composition and the second aqueous coating composition contains a triisocyanate compound represented by formula (II). 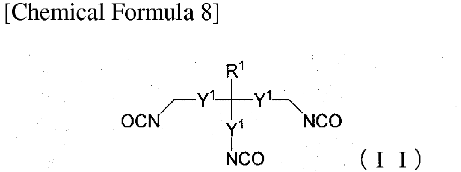 [In formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent CI-12 hydrocarbon group.]
[12] The method according to [9] or [10], wherein said at least one aqueous coating composition selected from the group consisting of the first aqueous coating composition and the second aqueous coating composition contains a polyisocyanate compound.
[13] The method according to [9] or [10], wherein the clear coating composition contains the triisocyanate compound represented by formula (II). 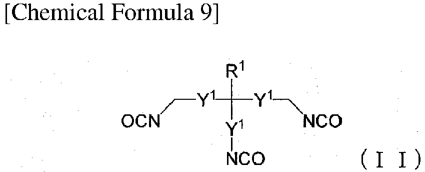 [In formula (II), a plurality of Y¹ are each independently a single bond or a divalent CI-20 hydrocarbon group optionally having an ester structure and/or an ether structure, the plurality of Y¹ may be the same or different, and R¹ is a hydrogen atom or a monovalent C1-12 hydrocarbon group.]
[14] The method according to [9] or [10], wherein the clear coating composition contains a polyisocyanate compound.

### Effects of the Invention

According to the multilayer coating film and the method for producing the same of the above aspects, it is possible to obtain a multilayer coating film including a coating film having excellent sagging resistance and yellowing resistance at the time of baking.

### BEST MODE FOR CARRYING OUT THE INVENTION

Hereinafter, embodiments for carrying out the present invention (hereinafter, may be simply referred to as "the present embodiment") will be described in detail. The following embodiments are examples for explaining the present invention, and are not intended to limit the present invention to the following contents. The present invention can be appropriately modified and implemented within the scope of the invention.

### <<Coating film>>

The coating film of the present embodiment includes a structure represented by formula (I)-1.

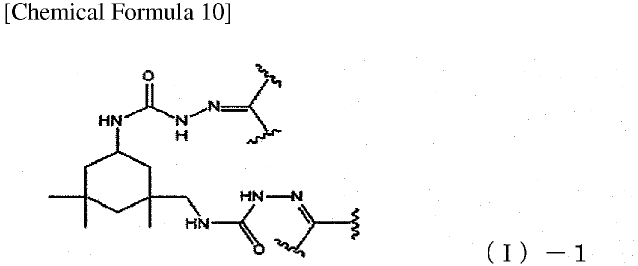

The coating film of the present embodiment preferably further includes a structure represented by formula (II)-1.

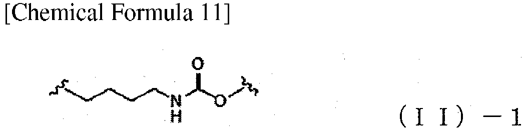

The structure represented by formula (II)-1 is preferably a structure represented by formula (II)-2. 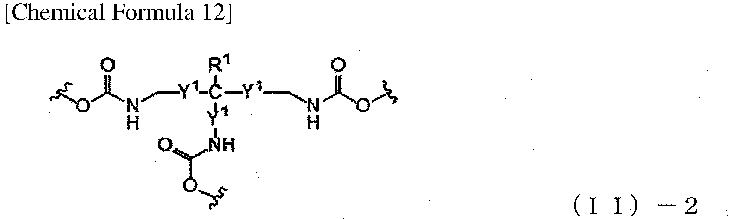 [In formula (II)-2, a plurality of Y¹ are each independently a single bond or a divalent C1-20 hydrocarbon group optionally having an ester structure and/or an ether structure, the plurality of Y¹ may be the same or different, and R¹ is a monovalent CI-12 hydrocarbon group.]

In the coating film of the present embodiment, a ratio between a carbonyl group (A) in the structure represented by formula (I)-1 to a carbonyl group (B) in the structure represented by formula (II)-1 is preferably A/(A+B) = 0.2 to 0.9, more preferably 0.4 to 0.8.

Further, a weight ratio between a structure (A') represented by formula (I)-1 and a structure (B') represented by formula (II)-2 is preferably A'/(A'+ B') = 0.2 to 1.0, more preferably 0.2 to 0.95, even more preferably 0.25 to 0.95, still even more preferably 0.5 to 0.9, and particularly preferably 0.5 to 0.85, in terms of the compound represented by formula (I) and the compound represented by formula (II). 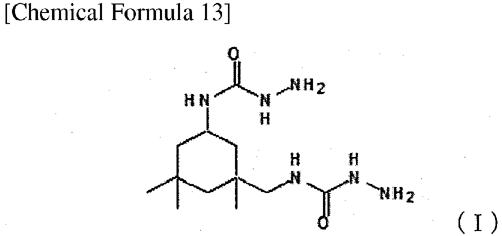 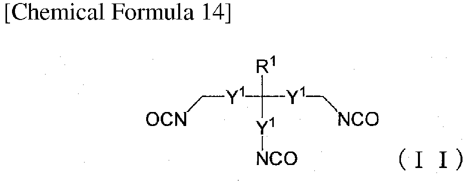 [In formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent CI-12 hydrocarbon group.]

R¹ and Y¹ are as specifically described later.

The film thickness of the present embodiment is not particularly limited, but is usually 3 µm or more and 50 µm or less, preferably 5 µm or more and 45 µm or less, and more preferably 10 µm or more and 40 µm or less.

### <<Method for producing coating film>>

The method for producing a coating film of the present embodiment includes a step of applying and drying an aqueous coating composition containing a semicarbazide compound represented by the following formula (1) (hereinafter, may be abbreviated as "semicarbazide compound (1)"). As the drying, a method of allowing to stand at room temperature, a method of heating and baking, and the like can be mentioned.

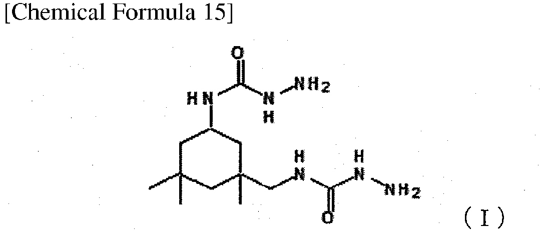

In the method for producing a coating film of the present embodiment, it is preferable to apply a coating composition further containing an isocyanate compound represented by the following formula (II').

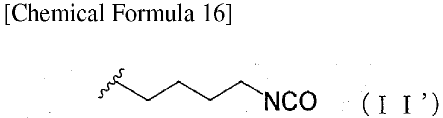

The isocyanate compound preferably contains a triisocyanate compound represented by the following formula (II) (hereinafter, may be abbreviated as "triisocyanate compound (II)") in terms of having improved chipping resistance. 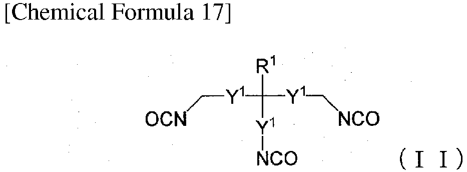 [In formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent CI-12 hydrocarbon group.]

R¹ and Y¹ are as specifically described later.

Specifically, examples of the preferred triisocyanate compound (II) include 4-isocyanate methyl-1,8-octamethylene diisocyanate (hereinafter, may be referred to as "NTI", molecular weight: 251) disclosed in International Publication No. 1996/17881 (Reference 1), 1,3,6-hexamethylenetriisocyanate (hereinafter, may be referred to as "HTI", molecular weight: 209) disclosed in JP-A-S57-198760 (Reference 2), bis (2-isocyanatoethyl) 2-isocyanatoglutarate (hereinafter, may be referred to as "GTI", molecular weight: 311) disclosed in Japanese Patent Publication No. H4-1033 (Reference 3), lysine triisocyanate disclosed in JP-A-S53-135931 (Reference 4) (hereinafter, may be referred to as "LTI", molecular weight 267), and the like. From the viewpoint of the transferability of the isocyanate component to the first uncured coating film and the reactivity of the isocyanate group, LTI, NTI and GTI are preferable, LTI and NTI are more preferable, and LTI is even more preferable.

The lower limit of the molecular weight of the triisocyanate compound (II) is preferably 139, more preferably 150, even more preferably 180, and particularly preferably 200.

On the other hand, the upper limit of the molecular weight of the triisocyanate compound (II) is preferably 1,000, more preferably 800, even more preferably 600, and particularly preferably 400.

That is, the molecular weight of the triisocyanate compound (II) is preferably 139 or more and 1,000 or less, more preferably 150 or more and 800 or less, even more preferably 180 or more and 600 or less, and particularly preferably 200 or more and 400 or less.

When the molecular weight of the triisocyanate compound (II) is at least the above lower limit, crystallization can be further suppressed, and when it is at least the above upper limit, it becomes easier to achieve low viscosity.

The triisocyanate compound (II) can be obtained, for example, by isocyanizing an amine such as an amino acid derivative, an ether amine, an alkyl triamine or the like.

Examples of the amino acid derivative include 2,5-diaminovaleric acid, 2,6-diaminocaproic acid, aspartic acid, glutamic acid and the like. These amino acid derivatives are diamine monocarboxylic acids or monoamine dicarboxylic acids. Therefore, the number of amino groups can be controlled by esterifying the carboxy groups with an alkanolamine such as ethanolamine or the like. Alternatively, the number of amino groups can be controlled by esterifying the carboxy groups with an alcohol such as methanol or the like.

The obtained amine having an ester structure can be made into a triisocyanate compound containing an ester structure by phosgenation of the amine, or the like.

Examples of the ether amine include a polyoxyalkylene triamine under the trade name "D403" of Mitsui Fine Chemicals Inc. These ether amines are triamines, and can be made into a triisocyanate compound containing an ether structure by phosgenation of the amine or the like.

Examples of the alkyltriamine include 4-aminomethyl-1,8-octanediamine and the like. The alkyltriamine can be made into a triisocyanate containing only a hydrocarbon by phosgenation of the amine, or the like.

In the method for producing a coating film of the present embodiment, a coating composition containing a blocked isocyanate compound obtained by blocking the above-mentioned isocyanate compound with a heat-dissociable blocking agent can be used.

The heat-dissociable blocking agent is not particularly limited, and for example, oxime compounds, alcohol compounds, acid amide compounds, acid imide compounds, phenol compounds, amine compounds, active methylene compounds, imidazole compounds and pyrazole compounds can be mentioned.

The oxime compounds are not particularly limited, and examples thereof include a formaldehyde, acetoaldoxime, acetooxime, methylethylketooxime and cyclohexanone oxime. The alcohol compounds are not particularly limited, and examples thereof include a methanol, ethanol, 2-propanol, n-butanol, sec-butanol, 2-ethyl-1-hexanol, 2-methoxyethanol, 2-ethoxyethanol, and 2-butoxyethanol. The acid amide compounds are not particularly limited, and examples thereof include an acetanilide, acetate amide, ε-caprolactam, δ-valerolactam, and γ-butyrolactam. The acid imide compounds are not particularly limited, and examples thereof include a succinate imide and maleate imide. The phenolic compounds are not particularly limited, and examples thereof include a phenol, cresol, ethylphenol, butylphenol, nonylphenol, dinonylphenol, styrenated phenol, and hydroxybenzoic acid ester. The amine compounds are not particularly limited, and examples thereof include a diphenylamine, aniline, carbazole, di-n-propylamine, diisopropylamine, and isopropylethylamine. The active methylene compounds are not particularly limited, and examples thereof include a dimethyl malonate, diethyl malonate, diisopropyl malonate, methyl acetoacetate, ethyl acetoacetate, and acetylacetone. The imidazole compounds are not particularly limited, and examples thereof include an imidazole and 2-methylimidazole. The pyrazole compounds are not particularly limited, and examples thereof include a pyrazole, 3-methylpyrazole, and 3,5-dimethylpyrazole.

Among the above-mentioned heat-dissociable blocking agents, from the viewpoint of availability and viscosity, reaction temperature, and reaction time of the obtained blocked polyisocyanate composition, at least one selected from the group consisting of oxime compounds, acid amide compounds, amine compounds, active methylene compounds and pyrazole compounds is preferably contained, and a methyl ethyl ketooxime, ε-caprolactam, diethyl malonate, ethyl acetoacetate, diisopropylamine, and 3,5-dimethylpyrazole are more preferable, a methylethylketooxime, diisopropylamine, and 3,5-dimethylpyrazole are even more preferable, and 3,5-dimethylpyrazole is particularly preferable from the viewpoint of achieving both low-temperature curability and compatibility with the active hydrogen compound as a main agent. The heat-dissociable blocking agent may be used alone or in combination of two or more.

In the method for producing a coating film of the present embodiment, the aqueous coating composition (B) containing the semicarbazide compound (I) described above can be applied on the uncured coating film (A) containing the isocyanate compound described above, and then dried. Accordingly, the isocyanate compound in the uncured coating film (A) is transferred to the layer of the aqueous coating composition (B), and as a result, a coating film containing both the semicarbazide compound (I) and the isocyanate compound can be obtained.

Alternatively, the aqueous coating composition (B) containing the semicarbazide compound (I) described above can be applied, and in an uncured state, the coating material (C) containing the isocyanate compound described above can be applied, and then dried. Accordingly, the isocyanate compound in the coating material (C) is transferred to the layer of the aqueous coating composition (B), and as a result, a coating film containing both the semicarbazide compound (I) and the isocyanate compound can be obtained.

The object to be coated is not particularly limited, and examples thereof include outer panels of an automobile body such as passenger cars, trucks, motorcycles, buses or the like; automobile parts such as bumpers or the like; outer panels of home appliances such as mobile phones, audio devices or the like, and among them, outer panels of an automobile body or automobile parts are preferable.

The material of the object to be coated is not particularly limited, and examples thereof include metallic materials such as iron, aluminum, brass, copper, tin, stainless steel, zinc-plated steel, zinc alloy (Zn-Al, Zn-Ni, Zn-Fe, etc.)-plated steel; resins such as a polyethylene resin, polypropylene resin, acrylonitrile-butadiene-styrene (ABS) resin, polyamide resin, acrylic resin, vinylidene chloride resin, polycarbonate resin, polyurethane resin, epoxy resin or the like, various plastic materials such as FRP; inorganic materials such as glass, cement and concrete or the like; wood; fiber materials such as paper, cloth or the like. Among the examples, metal materials or plastic materials are preferable.

The object to be coated may be one in which a surface of the above-described metal material or a metal surface of a vehicle body or the like molded from the above-described metal material is subjected to a surface treatment such as phosphate treatment, chromate treatment, or composite oxide treatment, and may also be one in which a coating film is further formed thereon.

The object to be coated on which a coating film is formed may be one in which a surface treatment is applied as necessary and an undercoat coating film is formed thereon, for example, a vehicle body in which an undercoat coating film is formed by an electrodeposition paint.

The object to be coated may be one in which a surface of the above-described plastic material or a plastic surface of an automobile part or the like molded from the above-described metal material is subjected to a surface treatment as needed.

Further, the object to be coated may be a combination of a plastic material and a metal material.

Examples of the coating method of the aqueous coating composition include known coating methods such as roll coating, curtain flow coating, spray coating, bell coating, electrostatic coating or the like.

From the viewpoint of energy saving and heat resistance of the base material, the heating temperature is preferably about 70 °C or higher and about 150 °C or lower, more preferably about 80 °C or higher and about 130 °C or lower, and even more preferably about 90 °C or higher and about 120 °C or lower.

From the viewpoint of energy saving and heat resistance of the base material, the heating time is preferably about 10 minutes or more and about 60 minutes or less, and more preferably about 15 minutes or more and about 50 minutes or less.

Next, the details of each coating composition used in the method for producing a coating film of the present embodiment will be described below.

### <Aqueous coating composition>

The aqueous coating composition contains a curing agent component and a main component.

A semicarbazide compound (I) is contained as a curing agent component.

### [Semicarbazide compound]

In general, a semicarbazide compound is a compound derived from a hydrazine and an isocyanate compound, that is, a reaction product of a hydrazine and an isocyanate compound. Further, the semicarbazide compound may have two or more amino groups, or may have two or more semicarbazide groups. The semicarbazide group is a group represented by the following general formula (b).

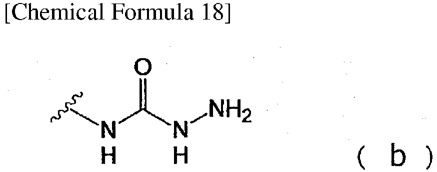

The aqueous coating composition contains a semicarbazide compound (I) (a compound represented by the following formula (I)) among the semicarbazide compounds. The semicarbazide compound (I) is a reaction product of an isophorone diisocyanate with a hydrazine or a monohydrate thereof.

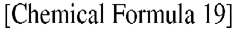

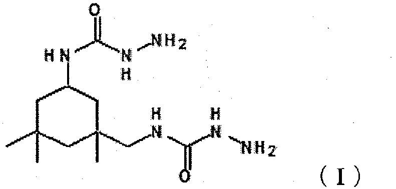

When the semicarbazide compound (I) is contained in the aqueous coating composition, the content of the semicarbazide compound having an isophorone diisocyanate skeleton (hereinafter, may be abbreviated as "ratio of IPDI") is preferably 50% by mass or more, more preferably 70% by mass or more, even more preferably 85% by mass or more, particularly preferably 90% by mass or more, and most preferably 100% by mass or more.

The "semicarbazide compound having an isophorone diisocyanate skeleton" referred to here also includes, in addition to the above-mentioned semicarbazide compound (I) which is a monomer, a compound (multimer) in which the skeletons of isophorone diisocyanate (residues of isophorone diisocyanate excluding isocyanate groups) are bonded to each other via a bond represented by the following formula (b)-1 (hereinafter, may be referred to as "bond (b)-1") or a bond represented by the following formula (b)-2 (hereinafter, may be referred to as "bond (b)-2").

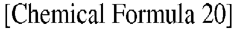

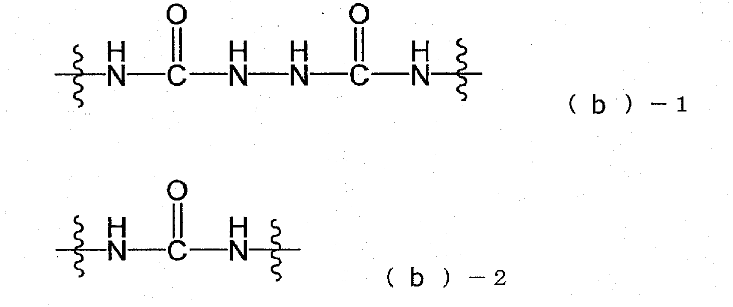

Further, in the multimer of the semicarbazide compound, some or all of the terminal functional groups are semicarbazide groups (-NHCONHNH2). When some of the terminal functional groups of the semicarbazide compound are semicarbazide groups, the remaining terminal functional groups may be amino groups or isocyanate groups. Multimers having the same degree of polymerization, such as dimers and trimers, may contain multimers having the same terminal functional groups, or having different functional groups.

More specifically, examples of the dimer derived from IPDI as the isocyanate compound and a hydrazine include a compound represented by the following formula (III) and the like, and examples of the trimer include a compound represented by the following formula (IV) and the like. The structures of the monomer and the multimer vary depending on the type of the isocyanate compound used, the reaction conditions, and the like, and are not limited to these compounds.

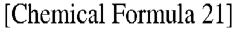

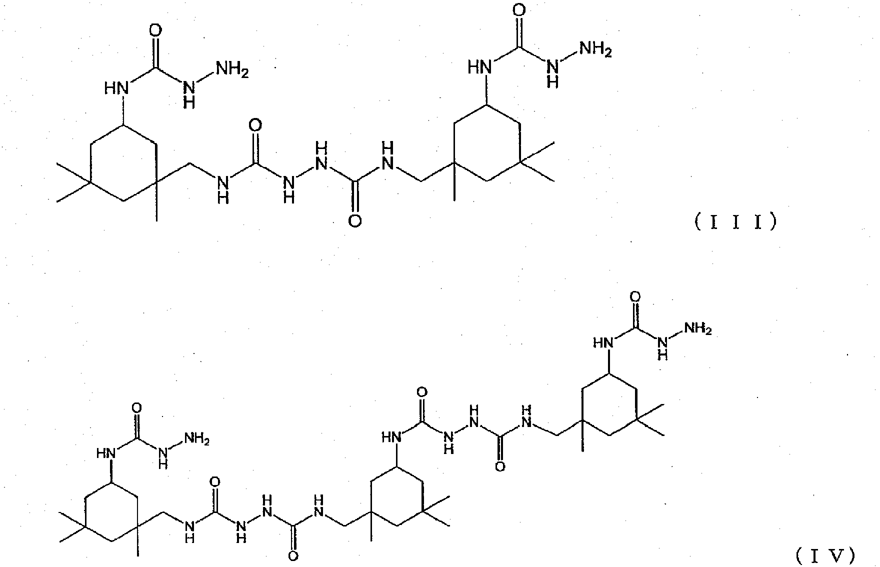

The IPDI ratio can be calculated from the measurement by LC/MS. Specifically, it can be calculated by the method described in the Examples described later.

### (Isocyanate compound)

The isocyanate compound used for producing the semicarbazide compound (I) is an isophorone diisocyanate (hereinafter, may be abbreviated as "IPDI").

Further, the first aqueous coating composition and the second aqueous coating composition may contain a semicarbazide compound other than the semicarbazide compound (I). Examples of the isocyanate compound that can be used in combination with IPDI used in that case include a diisocyanate compound having two isocyanate groups, a triisocyanate compound having three isocyanate groups, and a polyisocyanate compound having four or more isocyanate groups.

Examples of the diisocyanate compound include aliphatic diisocyanates, alicyclic diisocyanates, aromatic diisocyanates and the like.

The aliphatic diisocyanate is not particularly limited, and examples thereof include 1,4-tetramethylene diisocyanate, 1,5-pentamethylene diisocyanate, 1,6-hexamethylene diisocyanate (hereinafter, may be abbreviated as "HDI"), 2,2,4-trimethyl-1,6-hexamethylene diisocyanate, lysine diisocyanate and the like, from the viewpoint of having excellent water solubility of the semicarbazide compound obtained by the reaction with hydrazine, water resistance and mechanical strength of the coating film using the obtained semicarbazide compound.

The alicyclic diisocyanate is not particularly limited, and examples thereof include 4,4'-methylenebiscyclohexyldiisocyanate (hereinafter, may be abbreviated as "hydrogenated MDI"), dimethylcyclohexanediisocyanate (hereinafter, may be abbreviated as "hydrogenated XDI") and the like, from the viewpoint of having excellent water solubility of the semicarbazide compound obtained by the reaction with hydrazine, water resistance and mechanical strength of the coating film using the obtained semicarbazide compound.

Examples of the aromatic diisocyanate include 2,4-toluene diisocyanate, 2,6-toluene diisocyanate and a mixture thereof (hereinafter, may be abbreviated as "TDIs"), diphenylmethane-4,4'-diisocyanate (hereinafter, may be abbreviated as "MDI"), naphthalene-1,5-diisocyanate (hereinafter, may be abbreviated as "NDI"), 3,3-dimethyl-4,4-diphenylenediocyanate (hereinafter, may be abbreviated as "TODI"), crude TDIs, polymethylene polyphenyl diisocyanate, crude MDI, phenylene diisocyanate, xylylene diisocyanate (hereinafter, may be abbreviated as "XDI") and the like.

One or two or more of these diisocyanate compounds can be used in combination with IPDI.

Examples of the triisocyanate compound include 4-isocyanate methyl-1,8-octamethylene diisocyanate (hereinafter, may be referred to as "NTI", molecular weight: 251) disclosed in Patent Document 2, 1,3,6-hexamethylene triisocyanate (hereinafter, may be referred to as "HTI", molecular weight: 209) disclosed in Patent Document 3, bis (2-isocyanatoethyl) 2-isocyanatoglutarate (hereinafter, may be referred to as "GTI", molecular weight: 311) disclosed in Patent Document 4, lysine triisocyanate (hereinafter, may be referred to as "LTI", molecular weight: 267) disclosed in Patent Document 5, and the like.

Examples of the polyisocyanate compound include those derived from the above-described diisocyanate compounds and having at least one functional group selected from the group consisting of an isocyanurate group, an allophanate group, an iminodioxadiazinedione group, a biuret group and a urethane group.

In addtion, the "isocyanurate group" is a functional group formed by reacting three isocyanate groups, and is a group represented by the following formula (V).

In general, the "alofanate group" is a functional group formed by reacting a hydroxyl group of an alcohol with an isocyanate group, and is a group represented by the following formula (VI).

In general, the "iminooxadiazinedione group" is a functional group formed by reacting three isocyanate groups, and is a group represented by the following formula (VII).

In general, the "biuret group" is a functional group formed by reacting three isocyanate groups with a biuret-forming agent, and is a group represented by the following formula (VIII).

In general, the "urethane group" is a functional group formed by reacting one isocyanate group with one hydroxyl group, and is a group represented by the following formula (IX).

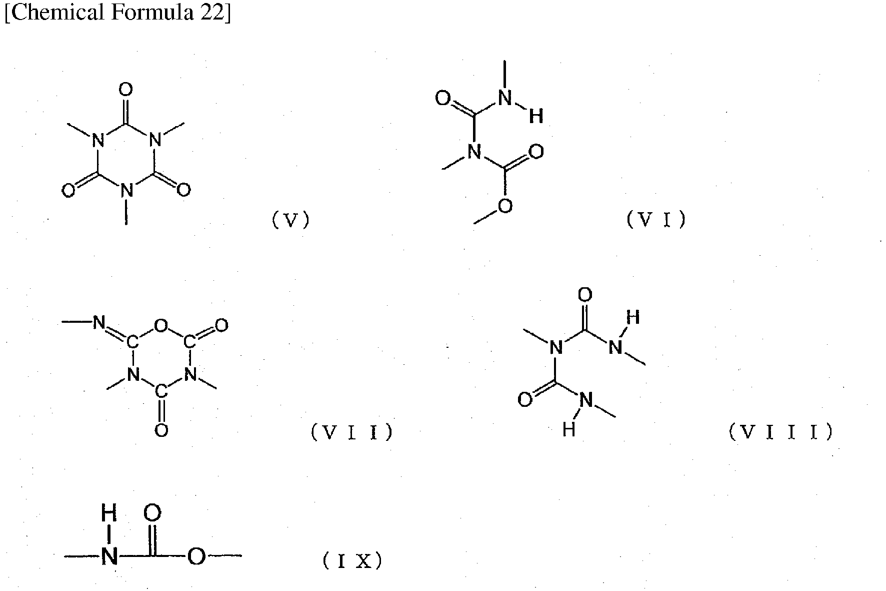

### (Hydrazine)

Examples of the hydrazine used in the production of the semicarbazide compound include hydrazine (NH₂NH₂); monoalkyl-substituted hydrazine compounds such as a monomethyl hydrazine, monoethyl hydrazine, monobutyl hydrazine or the like; ethylene-1,2-dihydrazine, propylene-1,3-dihydrazine and butylene-1,4-dihydrazine, and the like. Among the examples, hydrazine is preferable from the viewpoint of having excellent reactivity between the generated semicarbazide group and the carbonyl group of the resin. Although both anhydride and monohydrate of hydrazine can be used, it is preferable to use hydrazine monohydrate (NH₂NH₂·H₂O) from the viewpoint of manufacturing safety.

### (Method for producing semicarbazide compound)

The semicarbazide compound can be produced, for example, by adding a solution containing the above-described isocyanate compound to a solution containing hydrazine, and reacting the isocyanate compound with hydrazine.

### [(C) Main agent component]

At least one aqueous coating composition selected from the group consisting of aqueous coating compositions preferably further contains (C) a resin having a carbonyl group as a main agent component in addition to the semicarbazide compound (I).

(C) The resin having a carbonyl group (resin (C)) is a water-soluble or water-dispersible resin having two or more aldehyde groups or keto groups. Examples of the resin (C) include conventionally known polycarbonyl compounds such as polyurethane polymers, polyester polymers, poly (meth) acrylate polymers, polyvinyl acetate polymers, polybutadiene polymers, polyvinyl chloride polymers, and chlorinated polypropylene polymers, polyethylene polymers, polystyrene polymers, polystyrene-(meth) acrylate copolymers, rosin derivatives, styrene-maleic anhydride copolymers and alcohol adducts thereof, cellulose resins, and the like. These polycarbonyl compounds can be used alone or in combination of two or more.

The resin (C) can be obtained by copolymerizing or addition-polymerizing a monomer having at least one aldehyde group or keto group in the molecule with another monomer. It is considered that the aldehyde groups and the keto groups are involved in the cross-linking reaction as a carbonyl group after the polymerization reaction.

Specific examples of the monomer having at least one aldehyde group or keto group in the molecule include an acetonedicarboxylic acid, dihydroxyacetone, monohydroxyacetone, dihydroxybenzaldehyde and the like. The resin (C) having a carbonyl group can be obtained by addition-polymerizing one of these monomers alone or in combination of two or more.

Specific examples of the ethylenically unsaturated monomer having at least one aldehyde group or keto group in the molecule include achlorein, diacetoneacrylamide, diacetonemethacrylamide, formylstyrol, vinyl methyl ketone, vinyl ethyl ketone, vinyl isobutyl ketone, acrylic oxyalkyl propanals, methacrylic oxyalkyl propanals, diacetone acrylate, diacetone methacrylate, acetonyl acrylate, 2-hydroxypropyl acrylate acetyl acelate, butanediol-1,4-acrylate acrylate acrylate acetyl acetate, and the like. The resin (C) having a carbonyl group, namely the polycarbonyl compound can be obtained by copolymerizing a mixture of ethylenically unsaturated monomers containing one or two or more of these monomers and other ethylenically unsaturated monomers. However, the "ethylenically unsaturated monomer having at least one aldehyde group or keto group in the molecule" referred to here excludes ethylenically unsaturated monomers containing a carbonyl group of carboxylic acids and esters.

Further, the resin (C) may contain a functional group that crosslinks with another functional group in addition to the bond that crosslinks with the semicarbazide group. The cross-linked structure formed by such a cross-linking reaction includes, for example, a siloxane cross-linking by silanol condensation, urethane cross-linking between a hydroxyl group and isocyanate group, cross-linking between a hydroxyl group and melamine, amide ester cross-linking between oxazoline and a carboxyl group, acylurea cross-linking between a carbodiimide group and carboxyl group, cross-linking between a carboxyl or amino group and epoxy group, and the like.

Specific examples of the monomer having a crosslinkable functional group include γ-(meth) acrylicoxypropyltrimethoxysilane, vinylmethyldiethoxysilane, vinylmethyldimethoxysilane, vinyldimethylethoxysilane, vinyldimethylmethoxysilane, vinyl trimethoxysilane, vinyl triethoxysilane, 2-hydroxyethyl (meth) acrylate, 2-hydroxypropyl (meth) acrylate, ethylene glycol (meth) acrylate, ethylene glycol methoxy (meth) acrylate, diethylene glycol (meth) acrylate, diethylene glycol methoxy (meth) acrylate, tetraethylene glycol (meth) acrylate, tetraethylene glycol methoxy (meth) acrylate, (poly) oxypropylene (meth) acrylate, propylene glycol (meth) acrylate, propylene glycol (meth) acrylate, propylene glycol methoxy (meth) acrylate, dipropylene glycol (meth) acrylate, dipropylene glycol methoxy (meth) acrylate, tetrapropylene glycol (meth) acrylate, tetrapropylene glycol methoxy (meth) acrylate, 2-hydroxycyclohexyl (meth) acrylate, acrylic acid, metaacrylic acid, itaconic acid, glycidyl (meth) acrylate, allyl glycidyl ether, glycidyl cinnamon, glycidyl crotonate, glycidyl itaconic acid, glysidyl norbornenyl ester, glycidyl norbornenyl ether, and the like. These monomers can be used alone or in combination of two or more.

In the monomer mixture used for producing the resin (C), the content of the ethylenically unsaturated monomer having at least one aldehyde group or keto group in the molecule is preferably 0.5% by mass or more, and more preferably 0.5% by mass or more and 20% by mass or less with respect to the total mass of the monomer mixture. When the content of the ethylenically unsaturated monomer having an aldehyde group or keto group in the monomer mixture is at least the above lower limit, the number of cross-linking points increases, and the performance of the obtained coating film improves.

### (Method for producing resin (C) having carbonyl group)

Although the resin (C) having a carbonyl group can be produced by a known technique, it is preferably produced by emulsion polymerization, miniemulsion polymerization or solution polymerization from the viewpoint of easily controlling various physical properties such as particle size, molecular weight and the like,

### [Other components]

In addition to the semicarbazide compound and the resin (C) having a carbonyl group, the first aqueous coating composition and the second aqueous coating composition may contain, for example, a resin for modification, other curing agent components, pigments and the like.

The resin for modification is a water-soluble or water-dispersible resin, and specific examples thereof include a polyester resin, polyurethane resin, acrylic resin, alkyd resin, silicon resin, fluororesin, epoxy resin and the like. Among the examples, as the resin for modification, a polyurethane resin or an acrylic resin is preferable from the viewpoint of finishing property, chipping resistance and the like.

Examples of said other curing agent components include melamine resins, isocyanate group-containing compounds, blocked polyisocyanate compounds, carbodiimide group-containing compounds, oxazoline group-containing compounds and the like.

Examples of the pigment include a coloring pigment, an extender pigment, a bright pigment and the like. These pigments can be used alone or in combination of two or more.

When the pigment is contained, the blending amount of the pigment is generally 1 part by mass or more and 200 parts by mass or less, preferably 20 parts by mass or more and 150 parts by mass or less, and more preferably 50 parts by mass or more and 120 parts by mass or less with respect to 100 parts by mass of the solid content of the resin in the aqueous coating composition.

The first aqueous coating composition and the second aqueous coating composition, if necessary, may further contain ordinary additives of a coating material such as a curing catalyst, dispersant, settling inhibitor, organic solvent, defoamer, thickener, rust inhibitor, UV absorber, surface conditioner and the like, in addition to the semicarbazide compound and the resin (C) having a carbonyl group.

### «Multilayer coating film»

The multilayer coating film of the present embodiment is formed by laminating a first coating film, a second coating film, and a clear coating film in this order on an object to be coated.

The first coating film is a coating film obtained by curing the first aqueous coating composition.

The second coating film is a coating film formed by curing the second aqueous coating composition.

The clear coating film is a coating film obtained by curing the clear coating composition.

At least one coating film selected from the group consisting of the first coating film and the second coating film is the coating film of the present embodiment described above.

In the multilayer coating film of the present embodiment, since at least one coating film selected from the group consisting of the first coating film and the second coating film is the coating film of the present embodiment, a multilayer coating film including a coating film having excellent chipping resistance, sagging resistance, and yellowing resistance at the time of baking can be obtained.

Further, in the multilayer coating film of the present embodiment, the clear coating film may have a structure represented by formula (II)-2. 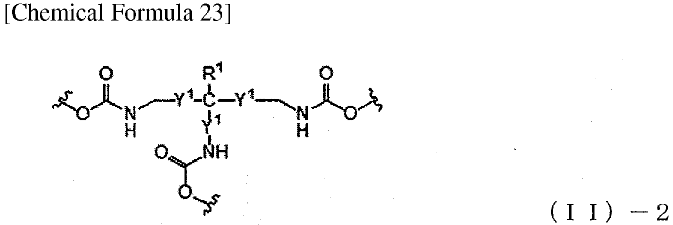 [In formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent CI-12 hydrocarbon group.]

Further, the glass transition temperature of the multilayer coating film of the present embodiment is preferably 30 °C or higher, more preferably 40 °C or higher, even more preferably 50 °C or higher from the viewpoint of coating film durability.

On the other hand, the upper limit of the glass transition temperature of the multilayer coating film of the present embodiment is not particularly limited, and it can be, for example, 100 °C.

### <<Method for producing multilayer coating film>>

The method for producing the multilayer coating film of the present embodiment is a method including the following steps 1 to 4 in this order.

Step 1: A step of applying the first aqueous coating composition on the surface of the object to be coated to form a first coating film;

Step 2: A step of applying the second aqueous coating composition on the first coating film to form a second coating film;

Step 3: A step of applying the clear coating composition on the second coating film to form a clear coating film;

Step 4: A step of simultaneously baking the first coating film, the second coating film, and the clear coating film formed on the object to be coated.

Further, at least one aqueous coating composition selected from the group consisting of the first aqueous coating composition and the second aqueous coating composition is a semicarbazide compound represented by the following formula (I) (hereinafter, may be abbreviated as "semicarbazide compound (I)").

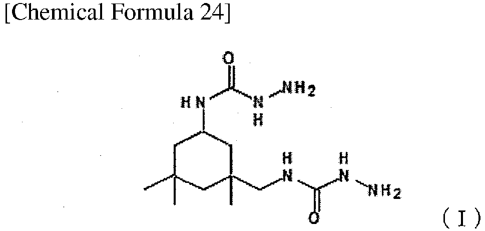

In the method for producing the multilayer coating film of the present embodiment, since at least one aqueous coating composition selected from the group consisting of the first aqueous coating composition and the second aqueous coating composition contains the semicarbazide compound (I), the above-described structure (I)-1 can be formed in at least one coating film selected from the group consisting of the first coating film and the second coating film, and a multilayer coating film including a coating film having excellent sagging resistance and yellowing resistance at the time of baking can be obtained.

As described above, the obtained multilayer coating film has a structure in which the first coating film, the second coating film, and the clear coating film are laminated in this order on the object to be coated.

The object to be coated is not particularly limited, and examples thereof include outer panels of an automobile body such as passenger cars, trucks, motorcycles, buses or the like; automobile parts such as bumpers or the like; outer panels of home appliances such as a mobile phones, audio devices or the like, and among them, outer panels of an automobile body or automobile parts are preferable.

The material of the object to be coated is not particularly limited, and examples thereof include metallic materials such as iron, aluminum, brass, copper, tin, stainless steel, zinc-plated steel, zinc alloy (Zn-Al, Zn-Ni, Zn-Fe, etc.)-plated steel; resins such as a polyethylene resin, polypropylene resin, acrylonitrile-butadiene-styrene (ABS) resin, polyamide resin, acrylic resin, vinylidene chloride resin, polycarbonate resin, polyurethane resin, epoxy resin or the like, various plastic materials such as FRP; inorganic materials such as glass, cement and concrete or the like; wood; fiber materials such as paper, cloth or the like. Among the examples, metal materials or plastic materials are preferable.

The object to be coated may be one in which a surface of the above-described metal material or a metal surface of a vehicle body or the like molded from the above-described metal material is subjected to a surface treatment such as phosphate treatment, chromate treatment, or composite oxide treatment, and may also be one in which a coating film is further formed thereon.

The object to be coated on which a coating film is formed may be one in which a surface treatment is applied as necessary and an undercoat coating film is formed thereon, for example, a vehicle body in which an undercoat coating film is formed by an electrodeposition paint.

The object to be coated may be one in which a surface of the above-described plastic material or a plastic surface of an automobile part or the like molded from the above-described metal material is subjected to a surface treatment as needed.

Further, the object to be coated may be a combination of a plastic material and a metal material.

The details of each step of the method for producing the multilayer coating film of the present embodiment will be described below.

### <Step 1>

In step 1, a first aqueous coating composition is applied on the object to be coated to form a first coating film.

Examples of the coating method of the first aqueous coating composition include known coating methods such as roll coating, curtain flow coating, spray coating, bell coating, electrostatic coating and the like.

From the viewpoint of improving smoothness and image clarity of the obtained multilayer coating film and suppressing popping, the uncured first coating film after coating can be subjected to preheating (pre-drying), air blowing or the like under heating conditions in which the coating film is not substantially cured. The term "popping" as referred to here means pinholes and foam marks generated on the surface of the coating film when the coating film is baked.

Further, in the present specification, the "cured coating film" means a coating film in a state of "cured and dried" defined in JIS K 5600-1-1: 1999, that is, a state where the coated surface does not have dents due to fingerprints and the movement of the coating film is not felt when the center of the coated surface is strongly pinched between the thumb and index finger, and no scratch marks are left on the coated surface when the center of the coated surface is rapidly and repeatedly rubbed with a fingertip. On the other hand, in the present specification, the "uncured coating film" is a state in which the coating film has not reached the above-mentioned "cured and dried" state, and includes the states of "set-to-touch" and "set-to-dry" defined in JIS K 5600-1-1: 1999.

By subjecting the uncured first coating film after coating to preheating, air blowing, or the like, the solid content concentration of the coating film is usually adjusted to about 60% by mass or more and about 100% by mass or less, preferably about 80% by mass or more and about 100% by mass or less, more preferably about 90% by mass or more and about 100% by mass or less.

The preheating temperature is preferably about 40 °C or higher and about 100 °C or lower, more preferably about 50 °C or higher and about 90 °C or lower, and even more preferably about 60 °C or higher and about 80 °C or lower. The preheating time is preferably about 30 seconds or more and about 15 minutes or less, more preferably about 1 minute or more and about 10 minutes or less, and even more preferably about 2 minutes or more and about 5 minutes or less.

The air blowing treatment, in general, can be performed by blowing air heated to room temperature (25 °C) or a temperature of about 25 °C or higher and about 80 °C or lower on the coated surface of the object to be coated for about 30 seconds or more and about 15 minutes or less.

The film thickness of the first coating film obtained by curing the first aqueous coating composition is usually about 3 µm or more and about 50 µm or less, preferably about 5 µm or more and about 45 µm or less, and more preferably about 10 µm or more and about 40 µm or less.

### <Step 2>

In step 2, a second aqueous coating composition is applied on the first coating film obtained in step 1 to form a second coating film. Examples of the method for applying the second aqueous coating composition include the same methods as those exemplified in the above "Step 1".

From the viewpoint of preventing the occurrence of coating film defects such as popping, the uncured second coating film after coating can be preheated, air blown, or the like under heating conditions in which the coating film is not substantially cured.

Examples of the preheating and air blowing conditions include the same conditions as those described in the above "step 1".

The film thickness of the second coating film obtained by curing the second aqueous coating composition is usually about 3 µm or more and about 50 µm or less, preferably about 5 µm or more and about 40 µm or less, and more preferably about 10 µm or more and about 30 µm or less.

### <Step 3>

In step 3, a clear coating composition is applied on the second coating film obtained in step 2 to form a clear coating film. Examples of the method for applying the clear coating composition include the same methods as those exemplified in the above "Step 1".

Further, if desired, the uncured clear coating film can be placed at room temperature for about 1 minute or more and about 60 minutes or less, or preheated at a temperature of about 40 °C or higher and about 80 °C or lower for about 1 minute or more and about 60 minutes or less.

The film thickness of the clear coating film obtained by curing the clear coating composition is usually about 10 µm or more and about 80 µm or less, preferably about 15 µm or more and about 60 µm or less, and more preferably about 20 µm or more and about 50 µm or less.

### <Step 4>

In step 4, the first coating film, the second coating film, and the clear coating film formed on the object to be coated are baked at the same time. As a result, the multilayer coating film composed of the first coating film, the second coating film and the clear coating film is cured. The multilayer coating film can be cured by ordinary coating film baking means such as hot air heating, infrared heating, high frequency heating or the like.

From the viewpoint of energy saving and heat resistance of the base material, the heating temperature is preferably about 70 °C or higher and about 150 °C or lower, more preferably about 80 °C or higher and about 130 °C or lower, and even more preferably about 90 °C or higher and about 120 °C or lower.

From the viewpoint of energy saving and heat resistance of the base material, the heating time is preferably about 10 minutes or more and about 60 minutes or less, and more preferably about 15 minutes or more and about 50 minutes or less.

By the above heating treatment, the multilayer coating film can be cured at once.

Next, each coating composition used in the method for producing the multilayer coating film of the present embodiment will be described in detail below.

### <Aqueous coating composition>

The first aqueous coating composition and the second aqueous coating composition contain a curing agent component and a main agent component.

At least one aqueous coating composition selected from the group consisting of the first aqueous coating composition and the second aqueous coating composition contains a semicarbazide compound (I) as a curing agent component.

### [Semicarbazide compound]

In general, a semicarbazide compound is a compound derived from a hydrazine and an isocyanate compound, that is, a reaction product of a hydrazine and an isocyanate compound. Further, the semicarbazide compound may have two or more amino groups, or may have two or more semicarbazide groups. The semicarbazide group is a group represented by the following general formula (b).

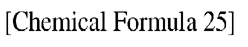

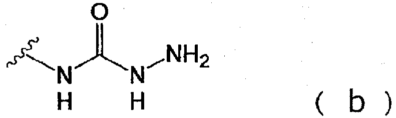

Said at least one aqueous coating composition selected from the group consisting of the first aqueous coating composition and the second aqueous coating composition contains a semicarbazide compound (I) (a compound represented by the following formula (I)) among the semicarbazide compounds. The semicarbazide compound (I) is a reaction product of an isophorone diisocyanate with a hydrazine or a monohydrate thereof.

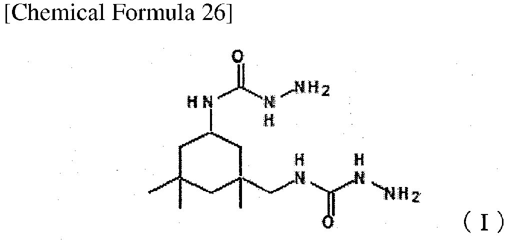

When the semicarbazide compound (I) is contained in the first aqueous coating composition and the second aqueous coating composition, the content of the semicarbazide compound having an isophorone diisocyanate skeleton (hereinafter, may be abbreviated as "ratio of IPDI") is preferably 50% by mass or more, more preferably 70% by mass or more, even more preferably 85% by mass or more, particularly preferably 90% by mass or more, and most preferably 100% by mass or more. When the ratio of IPDI is at least the above lower limit, sagging resistance of the coating film included in the multilayer coating film can be improved.

The "semicarbazide compound having an isophorone diisocyanate skeleton" referred to here also includes, in addition to the above-mentioned semicarbazide compound (I) which is a monomer, a compound (multimer) in which the skeletons of isophorone diisocyanate (residues of isophorone diisocyanate excluding isocyanate groups) are bonded to each other via a bond represented by the following formula (b)-1 (hereinafter, may be referred to as "bond (b)-1") or a bond represented by the following formula (b)-2 (hereinafter, may be referred to as "bond (b)-2").

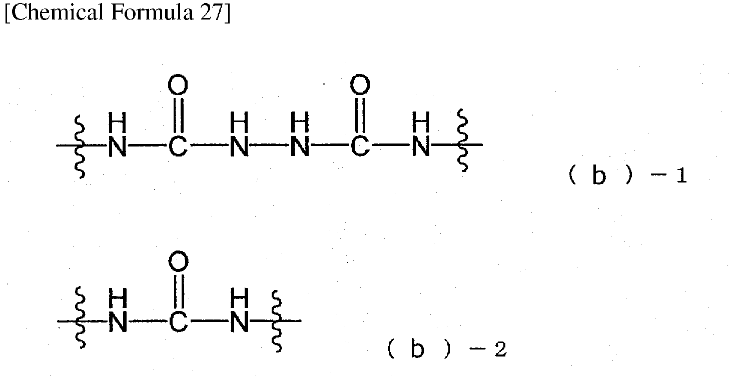

Further, in the multimer of the semicarbazide compound some or all of the terminal functional groups are semicarbazide groups (-NHCONHNH₂). When some of the terminal functional groups of the semicarbazide compound are semicarbazide groups, the remaining terminal functional groups may be amino groups or isocyanate groups. Multimers having the same degree of polymerization, such as dimers and trimers, may contain multimers having the same terminal functional groups, or having different functional groups.

More specifically, examples of the dimer derived from IPDI as the isocyanate compound and a hydrazine include a compound represented by the following formula (III) and the like, and examples of the trimer include a compound represented by the following formula (IV) and the like. The structures of the monomer and the multimer vary depending on the type of the isocyanate compound used, the reaction conditions, and the like, and are not limited to these compounds.

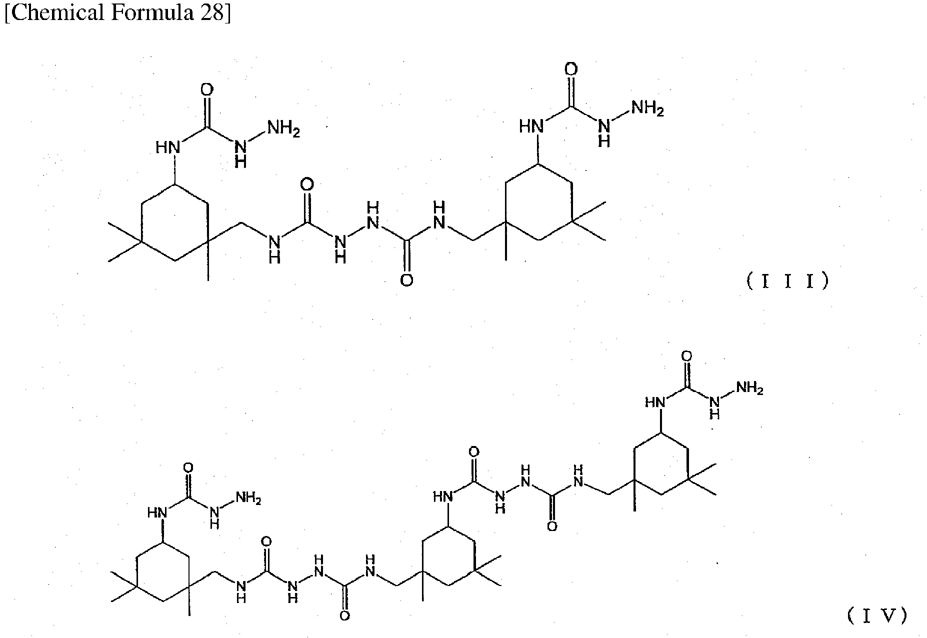

The IPDI ratio can be calculated from the measurement by LC/MS. Specifically, it can be calculated by the method described in the Examples described later.

### (Isocyanate compound)

The isocyanate compound used for producing the semicarbazide compound (I) is an isophorone diisocyanate (hereinafter, may be abbreviated as "IPDI").

Further, the first aqueous coating composition and the second aqueous coating composition may contain a semicarbazide compound other than the semicarbazide compound (I). Examples of the isocyanate compound that can be used in combination with IPDI used in that case include a diisocyanate compound having two isocyanate groups, a triisocyanate compound having three isocyanate groups, and a polyisocyanate compound having four or more isocyanate groups.

Examples of the diisocyanate compound include aliphatic diisocyanates, alicyclic diisocyanates, aromatic diisocyanates and the like.

The aliphatic diisocyanate is not particularly limited, and examples thereof include 1,4-tetramethylene diisocyanate, 1,5-pentamethylene diisocyanate, 1,6-hexamethylene diisocyanate (hereinafter, may be abbreviated as "HDI"), 2,2,4-trimethyl-1,6-hexamethylene diisocyanate, lysine diisocyanate and the like, from the viewpoint of having excellent water solubility of the semicarbazide compound obtained by the reaction with hydrazine, water resistance and mechanical strength of the coating film using the obtained semicarbazide compound.

The alicyclic diisocyanate is not particularly limited, and examples thereof include 4,4'-methylenebiscyclohexyldiisocyanate (hereinafter, may be abbreviated as "hydrogenated MDI"), dimethylcyclohexanediisocyanate (hereinafter, may be abbreviated as "hydrogenated XDI") and the like, from the viewpoint of having excellent water solubility of the semicarbazide compound obtained by the reaction with hydrazine, water resistance and mechanical strength of the coating film using the obtained semicarbazide compound.

Examples of the aromatic diisocyanate include 2,4-toluene diisocyanate, 2,6-toluene diisocyanate and a mixture thereof (hereinafter, may be abbreviated as "TDIs"), diphenylmethane-4,4'-diisocyanate (hereinafter, may be abbreviated as "MDI"), naphthalene-1,5-diisocyanate (hereinafter, may be abbreviated as "NDI"), 3,3-dimethyl-4,4-diphenylenediocyanate (hereinafter, may be abbreviated as "TODI"), crude TDIs, polymethylene polyphenyl diisocyanate, crude MDI, phenylene diisocyanate, xylylene diisocyanate (hereinafter, may be abbreviated as "XDI") and the like.

One or two or more of these diisocyanate compounds can be used in combination with IPDI.

Examples of the triisocyanate compound include 4-isocyanate methyl-1,8-octamethylene diisocyanate (hereinafter, may be referred to as "NTI", molecular weight: 251) disclosed in Patent Document 2, 1,3,6-hexamethylene triisocyanate (hereinafter, may be referred to as "HTI", molecular weight: 209) disclosed in Patent Document 3, bis (2-isocyanatoethyl) 2-isocyanatoglutarate (hereinafter, may be referred to as "GTI", molecular weight: 311) disclosed in Patent Document 4, lysine triisocyanate (hereinafter, may be referred to as "LTI", molecular weight: 267) disclosed in Patent Document 5, and the like.

Examples of the polyisocyanate compound include those derived from the above-described diisocyanate compounds and having at least one functional group selected from the group consisting of an isocyanurate group, an allophanate group, an iminodioxadiazinedione group, a biuret group and a urethane group.

In addtion, the "isocyanurate group" is a functional group formed by reacting three isocyanate groups, and is a group represented by the following formula (V).

In general, the "alofanate group" is a functional group formed by reacting a hydroxyl group of an alcohol with an isocyanate group, and is a group represented by the following formula (VI).

In general, the "iminooxadiazinedione group" is a functional group formed by reacting three isocyanate groups, and is a group represented by the following formula (VII).

In general, the "biuret group" is a functional group formed by reacting three isocyanate groups with a biuret-forming agent, and is a group represented by the following formula (VIII).

In general, the "urethane group" is a functional group formed by reacting one isocyanate group with one hydroxyl group, and is a group represented by the following formula (IX).

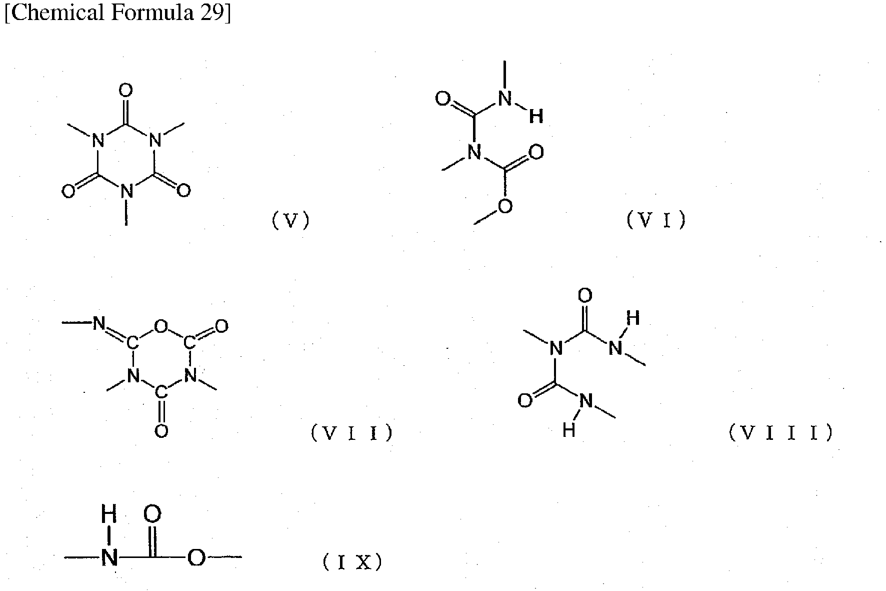

### (Hydrazine)

Examples of the hydrazine used in the production of the semicarbazide compound include hydrazine (NH₂NH₂); monoalkyl-substituted hydrazine compounds such as a monomethyl hydrazine, monoethyl hydrazine, monobutyl hydrazine or the like; ethylene-1,2-dihydrazine, propylene-1,3-dihydrazine and butylene-1,4-dihydrazine, and the like. Among the examples, hydrazine is preferable from the viewpoint of having excellent reactivity between the generated semicarbazide group and the carbonyl group of the resin. Although both anhydride and monohydrate of hydrazine can be used, it is preferable to use hydrazine monohydrate (NH₂NH₂·H₂O) from the viewpoint of manufacturing safety.

### (Method for producing semicarbazide compound)

The semicarbazide compound can be produced, for example, by adding a solution containing the above-described isocyanate compound to a solution containing hydrazine, and reacting the isocyanate compound with hydrazine.

### [(C) Main agent component]

At least one aqueous coating composition selected from the group consisting of the first aqueous coating composition and the second aqueous coating composition preferably further contains (C) a resin having a carbonyl group as a main agent component in addition to the semicarbazide compound (I).

(C) The resin having a carbonyl group (resin (C)) is a water-soluble or water-dispersible resin having two or more aldehyde groups or keto groups. Examples of the resin (C) include conventionally known polycarbonyl compounds such as polyurethane polymers, polyester polymers, poly (meth) acrylate polymers, polyvinyl acetate polymers, polybutadiene polymers, polyvinyl chloride polymers, and chlorinated polypropylene polymers, polyethylene polymers, polystyrene polymers, polystyrene-(meth) acrylate copolymers, rosin derivatives, styrene-maleic anhydride copolymers and alcohol adducts thereof, cellulose resins, and the like. These polycarbonyl compounds can be used alone or in combination of two or more.

The resin (C) can be obtained by copolymerizing or addition-polymerizing a monomer having at least one aldehyde group or keto group in the molecule with another monomer. It is considered that the aldehyde groups and the keto groups are involved in the cross-linking reaction as a carbonyl group after the polymerization reaction.

Specific examples of the monomer having at least one aldehyde group or keto group in the molecule include an acetonedicarboxylic acid, dihydroxyacetone, monohydroxyacetone, dihydroxybenzaldehyde and the like. The resin (C) having a carbonyl group can be obtained by addition-polymerizing one of these monomers alone or in combination of two or more.

Specific examples of the ethylenically unsaturated monomer having at least one aldehyde group or keto group in the molecule include achlorein, diacetoneacrylamide, diacetonemethacrylamide, formylstyrol, vinyl methyl ketone, vinyl ethyl ketone, vinyl isobutyl ketone, acrylic oxyalkyl propanals, methacrylic oxyalkyl propanals, diacetone acrylate, diacetone methacrylate, acetonyl acrylate, 2-hydroxypropyl acrylate acetyl acelate, butanediol-1,4-acrylate acrylate acrylate acetyl acetate, and the like. The resin (C) having a carbonyl group, namely the polycarbonyl compound can be obtained by copolymerizing a mixture of ethylenically unsaturated monomers containing one or two or more of these monomers and other ethylenically unsaturated monomers. However, the "ethylenically unsaturated monomer having at least one aldehyde group or keto group in the molecule" referred to here excludes ethylenically unsaturated monomers containing a carbonyl group of carboxylic acids and esters.

Further, the resin (C) may contain a functional group that crosslinks with another functional group in addition to the bond that crosslinks with the semicarbazide group. The cross-linked structure formed by such a cross-linking reaction includes, for example, a siloxane cross-linking by silanol condensation, urethane cross-linking between a hydroxyl group and isocyanate group, cross-linking between a hydroxyl group and melamine, amide ester cross-linking between oxazoline and a carboxyl group, acylurea cross-linking between a carbodiimide group and carboxyl group, cross-linking between a carboxyl or amino group and epoxy group, and the like.

Specific examples of the monomer having a crosslinkable functional group include γ-(meth) acrylicoxypropyltrimethoxysilane, vinylmethyldiethoxysilane, vinylmethyldimethoxysilane, vinyldimethylethoxysilane, vinyldimethylmethoxysilane, vinyl trimethoxysilane, vinyl triethoxysilane, 2-hydroxyethyl (meth) acrylate, 2-hydroxypropyl (meth) acrylate, ethylene glycol (meth) acrylate, ethylene glycol methoxy (meth) acrylate, diethylene glycol (meth) acrylate, diethylene glycol methoxy (meth) acrylate, tetraethylene glycol (meth) acrylate, tetraethylene glycol methoxy (meth) acrylate, (poly) oxypropylene (meth) acrylate, propylene glycol (meth) acrylate, propylene glycol (meth) acrylate, propylene glycol methoxy (meth) acrylate, dipropylene glycol (meth) acrylate, dipropylene glycol methoxy (meth) acrylate, tetrapropylene glycol (meth) acrylate, tetrapropylene glycol methoxy (meth) acrylate, 2-hydroxycyclohexyl (meth) acrylate, acrylic acid, metaacrylic acid, itaconic acid, glycidyl (meth) acrylate, allyl glycidyl ether, glycidyl cinnamon, glycidyl crotonate, glycidyl itaconic acid, glysidyl norbornenyl ester, glycidyl norbornenyl ether, and the like. These monomers can be used alone or in combination of two or more.

In the monomer mixture used for producing the resin (C), the content of the ethylenically unsaturated monomer having at least one aldehyde group or keto group in the molecule is preferably 0.5% by mass or more, and more preferably 0.5% by mass or more and 20% by mass or less with respect to the total mass of the monomer mixture. When the content of the ethylenically unsaturated monomer having aldehyde group or keto group in the monomer mixture is at least the above lower limit, the number of cross-linking points increases, and the performance of the obtained coating film improves.

### (Method for producing resin (C) having carbonyl group)

Although the resin (C) having a carbonyl group can be produced by a known technique, it is preferably produced by emulsion polymerization, miniemulsion polymerization or solution polymerization from the viewpoint of easily controlling various physical properties such as particle size, molecular weight and the like,

### [Other components]

In addition to the semicarbazide compound and the resin (C) having a carbonyl group, the first aqueous coating composition and the second aqueous coating composition may contain, for example, a resin for modification, other curing agent components, pigments and the like.

The resin for modification is a water-soluble or water-dispersible resin, and specific examples thereof include a polyester resin, polyurethane resin, acrylic resin, alkyd resin, silicon resin, fluororesin, epoxy resin and the like. Among the examples, as the resin for modification, a polyurethane resin or an acrylic resin is preferable from the viewpoint of finishing property, chipping resistance and the like.

Examples of said other curing agent components include melamine resins, isocyanate group-containing compounds, blocked polyisocyanate compounds, carbodiimide group-containing compounds, oxazoline group-containing compounds and the like.

Examples of the pigment include a coloring pigment, an extender pigment, a bright pigment and the like. These pigments can be used alone or in combination of two or more.

When the pigment is contained, the blending amount of the pigment is generally 1 part by mass or more and 200 parts by mass or less, preferably 20 parts by mass or more and 150 parts by mass or less, and more preferably 50 parts by mass or more and 120 parts by mass or less with respect to 100 parts by mass of the solid content of the resin in the aqueous coating composition.

The first aqueous coating composition and the second aqueous coating composition, if necessary, may further contain ordinary additives of coating material such as a curing catalyst, dispersant, settling inhibitor, organic solvent, defoamer, thickener, rust inhibitor, UV absorber, surface conditioner and the like, in addition to the semicarbazide compound and the resin (C) having a carbonyl group.

### <Clear coating composition>

Examples of the clear coating composition include thermosetting clear coating compositions known for coating automobile bodies, automobile parts, household electrical products, etc., for example, organic solvent-type thermosetting coating material containing a base resin (main agent component) having a crosslinkable functional group and a crosslinker (curing agent component), aqueous thermosetting coating material, thermosetting powder coating material, thermosetting powder slurry coating material. Among the examples, an organic solvent-type thermosetting coating material is preferable.

Examples of the crosslinkable functional group contained in the base resin include a carboxyl group, hydroxyl group, epoxy group, silanol group, alkoxysilyl group, reactive unsaturated group and the like.

Examples of the base resin include an acrylic resin, polyester resin, alkyd resin, urethane resin, epoxy resin, fluororesin and the like.

Examples of the cross-linking agent (curing agent component) include a polyisocyanate compound, blocked polyisocyanate compound, melamine resin, urea resin, carboxyl group-containing compound, carboxyl group-containing resin, epoxy group-containing resin, epoxy group-containing compound and the like.

Examples of the combination of the base resin and the cross-linking agent in the clear coating composition include a carboxyl group-containing resin and an epoxy group-containing resin, a hydroxyl group-containing resin and a polyisocyanate compound, a hydroxyl group-containing resin and a blocked polyisocyanate compound, a hydroxyl group-containing resin and a melamine resin, and the like.

Further, the clear coating composition can be a one-liquid type or a multi-liquid type, for example, a two-liquid urethane resin coating material. Above all, when the above clear coating material is heat-cured at a temperature of about 70 °C or higher and lower than about 120 °C, a one-liquid type urethane resin coating material containing a blocked polyisocyanate compound as a curing agent component or a two-liquid type urethane resin coating material containing an unblocked polyisocyanate compound as a curing agent component is preferable.

The clear coating composition, as necessary, may contain color pigments, brilliant pigments, dyes or the like to the extent that it does not impair transparency, and may also appropriately contain extender pigments, UV absorbers, light stabilizers, defoamers, thickeners, anti-rust agent, surface conditioners and the like.

The clear coating composition is preferably a coating composition containing an isocyanate compound represented by the following formula (II').

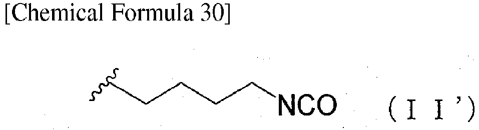

As the isocyanate compound, a polyisocyanate compound or a compound represented by the following formula (II) is preferable, and from the viewpoint of improved chipping resistance, a triisocyanate compound represented by the following formula (II) (hereinafter, may be abbreviated as "triisocyanate compound (II)") is more preferable.

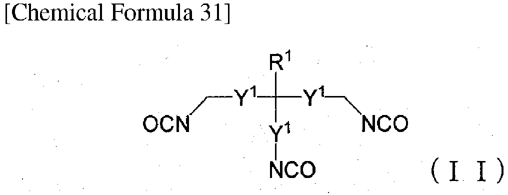

### [Isocyanate compound]

Examples of the isocyanate compound contained in the clear coating composition include a diisocyanate compound having two isocyanate groups, a triisocyanate compound having three isocyanate groups, and a polyisocyanate compound having four or more isocyanate groups.

Examples of the diisocyanate compound include an aliphatic diisocyanate, alicyclic diisocyanate, aromatic diisocyanate and the like.

The aliphatic diisocyanate is not particularly limited, and examples thereof include 1,4-tetramethylene diisocyanate, 1,5-pentamethylene diisocyanate, 1,6-hexamethylene diisocyanate (hereinafter, may be abbreviated as "HDI"), 2,2,4-trimethyl-1,6-hexamethylene diisocyanate, lysine diisocyanate and the like from the viewpoint of having excellent water resistance, mechanical strength and the like of the obtained coating film.

The alicyclic diisocyanate is not particularly limited, and examples thereof include isophorone diisocyanate (hereinafter, may be abbreviated as "IPDI"), 4,4'-methylenebiscyclohexyldiisocyanate (hereinafter, may be abbreviated as "hydrogenated MDI"), dimethylcyclohexanediisocyanate (hereinafter, may be abbreviated as "hydrogenated XDI") and the like, from the viewpoint of having excellent water resistance, mechanical strength or the like of the coating film using the obtained semicarbazide compound.

Examples of the aromatic diisocyanate include 2,4-toluene diisocyanate, 2,6-toluene diisocyanate and a mixture thereof (hereinafter, may be abbreviated as "TDI"), diphenylmethane-4,4'-diisocyanate (hereinafter, may be abbreviated as "MDI"), naphthalene-1,5-diisocyanate (hereinafter, may be abbreviated as "NDI"), 3,3-dimethyl-4,4-diphenylenediocyanate (hereinafter, may be abbreviated as "TODI"), crude TDIs, polymethylene polyphenyl diisocyanate, crude MDI, phenylene diisocyanate, xylylene diisocyanate (hereinafter, may be abbreviated as "XDI") and the like.

One or two or more of these diisocyanate compounds can be used in combination.

Examples of the polyisocyanate compound include those derived from the above-described diisocyanate compounds and having at least one functional group selected from the group consisting of an isocyanurate group, an allophanate group, an iminodioxadiazinedione group, a biuret group and a urethane group.

In addtion, the "isocyanurate group" is a functional group formed by reacting three isocyanate groups, and is a group represented by the following formula (V).

In general, the "alofanate group" is a functional group formed by reacting a hydroxyl group of an alcohol with an isocyanate group, and is a group represented by the following formula (VI).

In general, the "iminooxadiazinedione group" is a functional group formed by reacting three isocyanate groups, and is a group represented by the following formula (VII).

In general, the "biuret group" is a functional group formed by reacting three isocyanate groups with a biuret-forming agent, and is a group represented by the following formula (VIII).

In general, the "urethane group" is a functional group formed by reacting one isocyanate group with one hydroxyl group, and is a group represented by the following formula (IX).

In general, the "uretdione group" is a functional group formed by reacting two isocyanate groups, and is a group represented by the following formula (X).

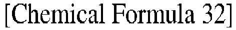

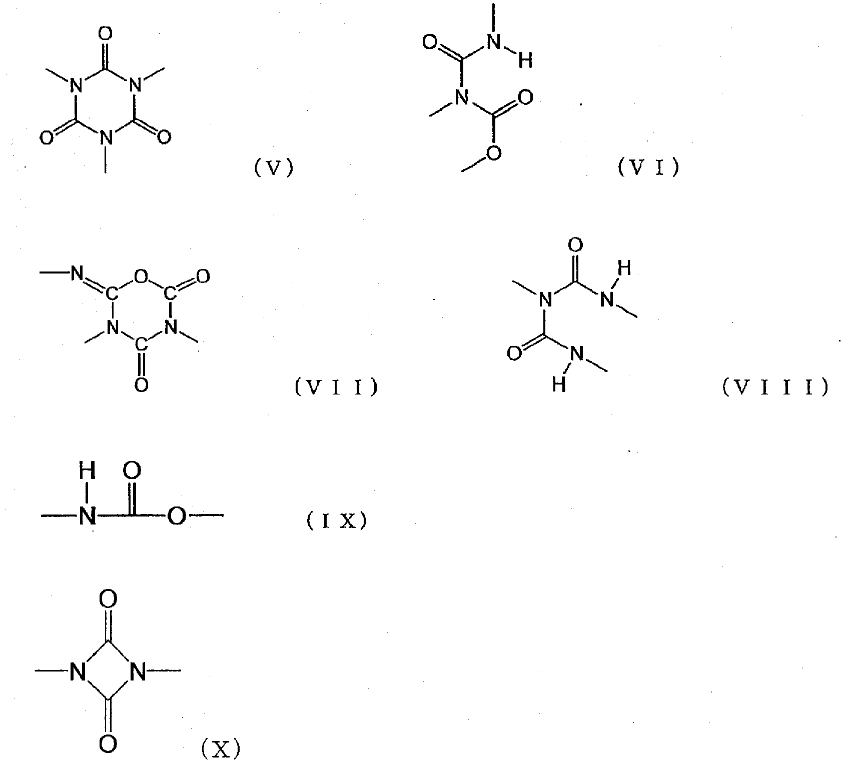

Among the examples, from the viewpoint of availability, weather resistance, and work efficiency, an isocyanate compound containing an isocyanurate group of HDI or a uretdione group of HDI is preferable.

### [Triisocyanate compound represented by formula (II)]

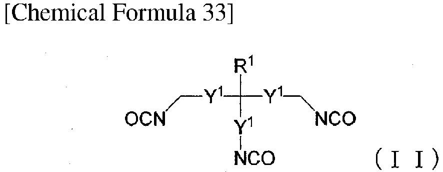

### (1) Y¹

In the general formula (I), a plurality of Y¹ are each independently a single bond or a divalent CI-20 hydrocarbon group optionally having an ester structure and/or an ether structure, and the plurality of Y¹ may be the same or different.

The divalent C1-20 hydrocarbon group for Y¹ that does not have an ester structure and ether structure may be an aliphatic group or an aromatic group. The aliphatic group may be linear, branched or cyclic.

Examples of the linear or branched aliphatic group include an alkanediyl group (alkylene group), alkylidene group and the like.

Examples of the cyclic aliphatic group include a cycloalkylene group and the like.

Examples of the aromatic group include an arylene group such as a phenylene group.

Among the examples, an alkylene group is preferable as the divalent C1-20 hydrocarbon group.

Examples of the alkylene group include a methylene group, dimethylene group, trimethylene group, tetramethylene group, octamethylene group and the like. Among the examples, a tetramethylene group is preferable as the alkylene group.

Examples of the divalent C1-20 hydrocarbon group having at least one selected from the group consisting of an ester structure (-COO-) and an ether structure (-O-) for Y¹ include a group represented by the following general formula (a) (hereinafter, may be referred to as "group (a)").

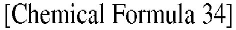

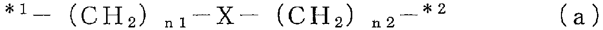

In the general formula (a), *1 indicates a bonding site with C in the general formula (I), and *2 indicates a bonding site with N in the general formula (I).

Further, n1 and n2 are integers such that 1 ≦ n1+n2 ≦ 20. That is, n1 and n2 are not 0 at the same time, and n2 is preferably 1 or more.

Among the examples, n1 and n2 are each independently preferably an integer of 0 or more and 20 or less, more preferably an integer of 0 or more and 4 or less, and even more preferably an integer of 0 or more and 2 or less.

As the combination of n1 and n2, for example, a combination of n1=0 and n2=2 and a combination of n1=2 and n2=2 are preferable.

Further, in the group (a), X preferably has an ester structure.

When at least one of the plurality of Y¹ has at least one selected from the group consisting of an aliphatic group and an aromatic group, the isocyanate component can have a lower viscosity.

Further, when at least one of the plurality of Y¹ has at least one selected from the group consisting of an aliphatic group and an alicyclic group, weather resistance of the coating film can be further improved.

Further, when at least one of the plurality of Y¹ has an ester structure, heat resistance of the isocyanate component can be further improved.

### (2) R¹

R¹ is a hydrogen atom or a monovalent C1-12 hydrocarbon group. The hydrocarbon group for R¹ is not particularly limited, and examples thereof include an alkyl group, alkenyl group, alkynyl group and the like. Among the examples, a hydrogen atom is preferable for R¹.

Specifically, examples of the preferred triisocyanate compound (II) include 4-isocyanate methyl-1,8-octamethylene diisocyanate (hereinafter, may be referred to as "NTI", molecular weight: 251) disclosed in International Publication No. 1996/17881 (Reference 1), 1,3,6-hexamethylenetriisocyanate (hereinafter, may be referred to as "HTI", molecular weight: 209) disclosed in JP-A-S57-198760 (Reference 2), bis (2-isocyanatoethyl) 2-isocyanatoglutarate (hereinafter, may be referred to as "GTI", molecular weight: 311) disclosed in Japanese Patent Publication No. H4-1033 (Reference 3), lysine triisocyanate disclosed in JP-A-S53-135931 (Reference 4) (hereinafter, may be referred to as "LTI", molecular weight 267), and the like. From the viewpoint of the transferability of the isocyanate component to the first uncured coating film and the reactivity of the isocyanate group, LTI, NTI and GTI are preferable, and LTI is more preferable.

The lower limit of the molecular weight of the triisocyanate compound (II) is preferably 139, more preferably 150, even more preferably 180, and particularly preferably 200.

On the other hand, the upper limit of the molecular weight of the triisocyanate compound (II) is preferably 1,000, more preferably 800, even more preferably 600, and particularly preferably 400.

That is, the molecular weight of the triisocyanate compound (II) is preferably 139 or more and 1,000 or less, more preferably 150 or more and 800 or less, even more preferably 180 or more and 600 or less, and particularly preferably 200 or more and 400 or less.

When the molecular weight of the triisocyanate compound (I) is at least the above lower limit, crystallization can be further suppressed, and when it is at least the above upper limit, it becomes easier to achieve low viscosity.

The triisocyanate compound (II) can be obtained, for example, by isocyanizing an amine such as an amino acid derivative, an ether amine, an alkyl triamine or the like.

Examples of the amino acid derivative include 2,5-diaminovaleric acid, 2,6-diaminocaproic acid, aspartic acid, glutamic acid and the like. These amino acid derivatives are diamine monocarboxylic acids or monoamine dicarboxylic acids. Therefore, the number of amino groups can be controlled by esterifying the carboxy groups with an alkanolamine such as ethanolamine or the like. Alternatively, the number of amino groups can be controlled by esterifying the carboxy groups with an alcohol such as methanol or the like.

The obtained amine having an ester structure can be made into a triisocyanate compound containing an ester structure by phosgenation of the amine, or the like.

Examples of the ether amine include a polyoxyalkylene triamine under the trade name "D403" of Mitsui Fine Chemicals Inc. These ether amines are triamines, and can be made into a triisocyanate compound containing an ether structure by phosgenation of the amine or the like.

Examples of the alkyltriamine include 4-aminomethyl-1,8-octanediamine and the like. The alkyltriamine can be made into a triisocyanate containing only a hydrocarbon by phosgenation of the amine, or the like.

### <<Article>>

The article of the present embodiment includes the above-mentioned multilayer coating film. Therefore, the article of the present embodiment is provided with a coating film having excellent sagging resistance and yellowing resistance at the time of baking.

Further, the article of the present embodiment may include a layer obtained by curing other coating materials or a coating layer, in addition to the above-mentioned multilayer coating film.

Examples of the object to be coated include the same as those exemplified in the above-mentioned "Method for producing multilayer coating film".

### [Examples]

Hereinafter, the present embodiment will be described in more detail with reference to the specific Examples and Comparative Examples, but the present embodiment is not limited to the following Examples and Comparative Examples as long as the present embodiment does not exceed the scope of the present invention.

The physical properties of the polyisocyanate and the semicarbazide components, and the evaluation of the coating film in Examples and Comparative Examples were measured and evaluated as follows. Unless otherwise specified, "parts" and "%" mean "parts by mass" and "% by mass".

### <Measurement method of physical properties>

Various physical properties were measured by the methods shown below.

### [Physical property 1] NCO content of polyisocyanate

The NCO content (% by mass) of the polyisocyanate was determined by neutralizing the isocyanate group in the polyisocyanate with an excess of 2N amine and then back titrating with 1N hydrochloric acid.

### [Physical property 2] Ratio of IPDI

The ratio of the semicarbazide compound having IPDI skeleton in the semicarbazide compound (hereinafter, may be abbreviated as "ratio of IPDI") was calculated using the measurement method shown below.

The aqueous coating composition was diluted with purified water to prepare an aqueous solution of 10 mg/mL. Then, using a centrifugal separator munufactured by HSIANGTAI MACHINERY INDUSTRY (MODEL MCD-2000), centrifugation was performed at 12,000 rpm for 10 minutes, and the supernatant was measured by LC/MS. The LC/MS device configuration was "Agilent, 1100 series" for LC and "Thermo Electron, LCQ" for MS. The identification of each peak obtained by the measurement was performed by MS, and the peak area of each peak was determined from the area of the absorbance at 200 nm in the LC ultraviolet-visible detector.

The measurement conditions for LC/MS are shown in the following. The LC conditions are shown in the first place. By using an LC column of Phenomenex, Kinetex 2.6u C18-XB 100A (2.1 mm LD.×50 mm), at a column oven temperature of 40 °C, with two types of solutions, i.e. a 0.1% formic acid aqueous solution (x) and a 0.1% formic acid containing methanol solution (y) as the solvents for the mobile phase, the liquid composition was linearly changed from 98% of liquid (x) to 100% of liquid (y) in 5 minutes, and then brought back to 98% of liquid (x) again in 5.1 minutes, so that the liquid composition with 98% of liquid (x) was maintained for 12 minutes. The flow rate of the mobile phase was set to 0.4 ml/min, and the sample injection volume was set to 1 µl. The wavelength of the ultraviolet-visible absorption detector attached to LC was set to 200 nm.

The MS conditions are shown in the second place. In positive mode of ESI (Electrospray Ionization), scanning was performed with a mass-to-charge ratio (m/z) in the range of 150 to 1,000.

The ratio of IPDI was determined from the peak area of the obtained chromatogram.

### [Physical property 3] Molar ratio A/(A+B) between the carbonyl group (A) in the structure represented by formula (I)-1 and the carbonyl group (B) in the structure represented by formula (II)-1

13C-NMR was measured using Biospin Avance 600 (trade name) manufactured by Bruker, and the molar ratio A/(A+B) was determined.

The specific measurement conditions were as follows.
13C-NMR device: AVANCE600 (manufactured by Bruker)
   Cryo probe (manufactured by Bruker)
   Cryo Probe
   CPDUL
   600S3-C/HD-05Z
Resonance frequency: 150 MHz
Concentration: 60 wt vol%
Shift criteria: CDCl3 (77 ppm)
Accumulation number: 10,000 times
Pulse program: zgpg30 (proton complete decoupling method, waiting time: 2 sec)

The molar ratio A/(A+B) was determined from the integrated value of the following signals.
Carbonyl group (A) in the structure represented by formula (I)-1: around 156 ppm
Carbonyl group (B) in the structure represented by formula (II)-1: around 158 ppm

### [Physical property 4] Weight ratio A'/(A'+B') between the structure (A') represented by formula (I)-1 and the structure (B') represented by formula (II)-2

Thermal desorption GC/MS was measured using the following devices, and the weight ratio A'/ (A'+ B') was determined.

The specific measurement conditions were as follows.
Thermal decomposition device: Py303D manufactured by FRONTIER LAB
Heating conditions: 60 °C to 10 °C/min, temperature rise - 600 °C
GC/MS device: 7890/MSD5975 manufactured by Agilent
Column temperature: 300 °C
Column flow rate: 1 mL/min
Injection port temperature: 300 °C
Ion source temperature: 230 °C
Interface temperature: 300 °C
Ionization method: Electron ionization method

The weight ratio A'/(A'+B') was obtained from the peak area ratio of the structure (A') represented by formula (I)-1 and the structure (B') represented by formula (II)-2.

### <Evaluation method of coating film>

The evaluation method of the coating film contained in the multilayer coating film obtained in the Examples and Comparative Examples was carried out by the method shown below.

### [Evaluation 1] Sagging resistance

As the object to be coated, a base material in which a hole with a diameter of 5 mm was previously formed in a JIS G 3141 (SPCC, SD) cationic electrodeposition coating plate was used, and as described in the Examples and the Comparative Examples described later, the first aqueous coating composition and the second aqueous coating composition were applied in this order and preheated at 80 °C for 5 minutes to form a coating film. Then, the laminate in which the first coating film and the second coating film were formed was mounted on a coated plate stand at a predetermined angle, and dried (air blow, preheating). After that, the state of the coating film was observed, and the sagging resistance was evaluated according to the following evaluation criteria based on the sagging trace of the coating film from the lower end of the hole and the angle of the coated plate.

### (Evaluation criteria)

5: Less than 2.5 mm at 90°
4: 2.5 mm or more at 90°
3: Less than 2.5 mm at 80°
2: 2.5 mm or more at 80°
1: 2.5 mm or more at 70°

### [Evaluation 2] Baking-yellowing resistance

A white tile plate was used as the object to be coated, and the b values of the coating films contained in the multilayer coating films obtained in the Examples and the Comparative Examples described later were measured. The obtained b values were used to evaluate the baking-yellowing resistance according to the following evaluation criteria.

### (Evaluation criteria)

○: b value was 0.0
Δ: b value was 0.1 or more and 0.3 or less
×: b value was 0.4 or more

### [Evaluation 3] Chipping resistance

A JIS G 3141 (SPCC, SD) cationic electrodeposition coating plate was used as the object to be coated to prepare a coated plate including a single-layer coating film or a multilayer coating film obtained in the Examples and the Comparative Examples described later. The coated plate was vertically attached to a sample holder of a gravel chipping test instrument (manufactured by Suga Test Instruments Co., Ltd., JA-400), and 250 g of granite gravel of No. 6 was sprayed with compressed air at 4 kg/cm² so that the granite gravel collided with the coated plate perpendicularly. The degree of peeling scratches at that time was evaluated according to the following criteria.

### (Evaluation criteria)

×: Even the electrodeposition coating film was peeled, and many scratches of 5 mm or more were observed.
Δ: Many scratches were observed on a part of the electrodeposition coating film and the coating film, and scratches of 5 mm or more were observed.
Δ+: Many scratches were observed on a part of the electrodeposition coating film and the coating film, and no scratches of 5 mm or more were observed.
○: Slight scratches were observed on a part of the electrodeposition coating film and the coating film, and scratches of 5 mm or more were observed.
○+: Slight scratches were observed on a part of the electrodeposition coating film and the coating film, and no scratches of 5 mm or more were observed.
⊚: Slight scratches were observed on a part of the coating film, and scratches of 2 mm or more were observed.
⊚+: Slight scratches were observed on a part of the coating film, and no scratches of 2 mm or more were observed.

### <Preparation of each component of aqueous coating compositions>

### [Preparation Example 1] Preparation of resin (C-1) containing carbonyl group

514.5 g of ion-exchanged water and 12.0 g of an aqueous solution containing 30% by mass of a surfactant (product name: Newcol707SF, manufactured by Nippon Emulsifier Co., Ltd., anionic surfactant, non-volatile content 30%) were charged in a reaction vessel equipped with a reflux condenser, a dropping tank, a thermometer and a stirrer. Next, after raising the temperature inside the reaction vessel to 80 °C, a liquid mixture of 18 g of methacrylic acid, 422.6 g of butyl acrylate, 108 g of diacetoneacrylamide, 230 g of methyl methacrylate, 70.2 g of butyl methacrylate, 51.3 g of 2-hydroxyethyl methacrylate, 9.0 g of dodecyl mercaptan, 456 g of ion-exchanged water, 30 g of Newcol707SF and 1.2 g of ammonium persulfate was allowed to flow into the reaction vessel from the dropping tank over 3 hours. The temperature inside the reaction vessel was kept at 80 °C during the inflow. After the completion of the inflow, the temperature inside the reaction vessel was set to 80 °C and maintained for 1 hour. Then, the temperature was cooled to room temperature, and a 25% aqueous ammonia solution was added to adjust the pH to 9.0. Next, the pH-adjusted solution was filtered through a 100-mesh wire mesh, and an appropriate amount of ion-exchanged water was added to obtain a resin (C-1) containing a carbonyl group. In the obtained resin (C-1) having a carbonyl group, the solid content was 40.0%.

### [Preparation Example 2] Preparation of polyisocyanate (P-1) containing HDI-based biuret structure

The inside of a four-necked flask equipped with a stirrer, a thermometer, a reflux condenser, and a nitrogen-blowing tube was made into a nitrogen atmosphere, and 100 g of HDI, 20 g of trimethylphosphate, 20 g of methyl cellosolve acetate and 1.2 g of water were charged therein and kept at a temperature of 160 °C for 3 hours. Then, the obtained reaction solution was fed to a thin film evaporator to remove unreacted HDI to obtain polyisocyanate (P-1). The NCO content of the obtained polyisocyanate (P-1) was 23.5% by mass.

### [Preparation Example 3] Preparation of semicarbazide component (A-1)

The inside of a four-necked flask equipped with a stirrer, a thermometer, a reflux condenser, and a nitrogen-blowing tube was made into a nitrogen atmosphere, and 225 g of isopropanol and 57 g of hydrazine monohydrate were charged therein, followed by stirring at a temperature of 25 °C for 30 minutes. A solution prepared by dissolving 50 g of IPDI in 450 g of tetrahydrofuran was added to this solution over 2 hours while stirring at 25 °C. The resulting mixture was then stirred at 25 °C for 1 hour. Isopropanol, tetrahydrofuran, excess hydrazine monohydrate, water, etc. in the obtained reaction solution were distilled off under heating and reduced pressure, and diluted with water so as to have a solid content of 50% by mass to obtain semicarbazide component (A-1).

### [Preparation Example 4] Preparation of semicarbazide component (A-2)

The inside of a four-necked flask equipped with a stirrer, a thermometer, a reflux condenser, and a nitrogen blowing tube was made into a nitrogen atmosphere, and 347 g of isopropanol and 28 g of hydrazine monohydrate were charged therein, followed by stirring at room temperature for 30 minutes. A solution prepared by dissolving 50 g of polyisocyanate (P-1) obtained in Preparation Example 2 in 200 g of tetrahydrofuran was added to this solution over 1 hour while stirring at 10 °C. The resulting mixture was then stirred at 40 °C for 3 hours. Isopropanol, tetrahydrofuran, excess hydrazine monohydrate, water, etc. in the obtained reaction solution were distilled off under heating and reduced pressure, and diluted with water so as to have a solid content of 50% by mass to obtain semicarbazide component (A-2).

### [Preparation Example 5] Preparation of polyisocyanate B-1 (HDI-based isocyanurate)

The inside of a four-necked flask equipped with a stirrer, a thermometer, a reflux condenser, and a nitrogen-blowing tube was made into a nitrogen atmosphere, and 50 g of HDI was charged therein, and the temperature inside the reaction vessel was kept at 80 °C while stirring. Tetramethylammonium capric acid was added thereto to carry out the reaction, and dibutyl phosphate was added at the time when the yield reached 40% to stop the reaction. Then, it was kept at 120 °C for 15 minutes to confirm that the reaction had stopped, thereby obtaining a reaction solution. After filtering the reaction solution, unreacted HDI was removed using a thin film evaporator to obtain polyisocyanate B-1. The NCO content of polyisocyanate B-1 was 21.5% by mass.

### Preparation Example 6] Polyisocyanate B-2 Production of (HDI-based uretdione)

The inside of a four-necked flask equipped with a stirrer, a thermometer, a reflux condenser, and a nitrogen-blowing tube was made into a nitrogen atmosphere, and 50 g of HDI was charged therein, and the temperature inside the reaction vessel was kept at 60 °C while stirring. 0.5 g of trisdiethylaminophosphine was added thereto to carry out the reaction. 0.4 g of phosphoric acid was added at the time 4 hours had passed, and kept at 60 °C for 1 hour to confirm that the reaction had stopped, thereby obtaining a reaction solution. After filtering the reaction solution, unreacted HDI was removed using a thin film evaporator to obtain polyisocyanate B-2. The NCO content of polyisocyanate B-2 was 24% by mass.

### [Preparation Example 7] Preparation of blocked polyisocyanate B-1B

The inside of a four-necked flask equipped with a stirrer, thermometer, reflux condenser, and nitrogen blowing tube was made into a nitrogen atmosphere, and 10 g of polyisocyanate B-1 and 14.9 g of propylene glycol monomethyl ether acetate were charged therein, and the temperature inside the reaction vessel was kept at 70 °C while stirring. 4.9 g of 3,5-dimethylpyrazole was added thereto to carry out the reaction for 60 minutes, and it was confirmed by infrared spectroscopic measurement that isocyanate absorption had disappeared, and blocked polyisocyanate B-1B was obtained.

### [Preparation Example 8] Preparation of blocked polyisocyanate B-2B

The inside of a four-necked flask equipped with a stirrer, thermometer, reflux condenser, and nitrogen-blowing tube was made into a nitrogen atmosphere, and10 g of polyisocyanate B-2 and 15.5 g of propylene glycol monomethyl ether acetate were charged therein, and the temperature inside the reaction vessel was kept at 70 °C while stirring. 5.5 g of 3,5-dimethylpyrazole was added thereto to carry out the reaction for 60 minutes, and it was confirmed by infrared spectroscopic measurement that isocyanate absorption had disappeared, and blocked polyisocyanate B-2B was obtained.

### [Preparation Example 9] Preparation of NTI

In a four-necked flask equipped with a stirrer, a thermometer and a gas introduction tube, 1,060 g of 4-aminomethyl-1,8-octamethylenediamine (hereinafter, may be referred to as "triamine") was dissolved in 1,500 g of methanol, and 1,800 mL of 35% concentrated hydrochloric acid was gradually added dropwise to the resulting solution while cooling. Methanol and water were removed under reduced pressure, then concentrated and dried at 60 °C/5 mmHg for 24 hours to obtain a white solid triamine hydrochloride. 650 g of the obtained triamine hydrochloride was suspended as a fine powder in 5,000 g of o-dichlorobenzene. The temperature of the reaction solution was raised while stirring, and when the temperature reached 100 °C, phosgene was started to be blown at a rate of 200 g/hour, the temperature was further raised and kept at 180 °C, and phosgene was continuously blown for 12 hours. Dissolved phosgene and solvent were distilled off under reduced pressure, and then vacuum distillation was performed to obtain 420 g of a colorless and transparent 4-isocyanate methyl-1,8-octanemethylene diisocyanate (hereinafter, may be referred to as "NTI") having a boiling point of 161 to 163 °C/1.2 mmHg. The NCO content of this product was 50.0% by weight.

### [Preparation Example 10] Preparation of LTI

122.2 g of ethanolamine, 100 mL of o-dichlorobenzene and 420 mL of toluene were charged in a 4-necked flask equipped with a stirrer, a thermometer and a gas introduction tube, and ice-cooled hydrogen chloride gas was introduced to convert ethanolamine to hydrochloride. Next, 182.5 g of lysine hydrochloride was added, the reaction solution was heated to 80 °C, ethanolamine hydrochloride was dissolved, and hydrogen chloride gas was introduced to obtain lysine dihydrochloride. Further, hydrogen chloride gas was passed at 20 to 30 mL/min, the reaction solution was heated to 116 °C, and this temperature was maintained until water-distillation stopped. The resulting reaction mixture was recrystallized in a mixed solution of methanol and ethanol to obtain 165 g of lysine β-aminoethyl ester trihydrochloride. 100 g of this lysine β-aminoethyl ester trihydrochloride was suspended as a fine powder in 1,200 mL of o-dichlorobenzene, the temperature of the reaction solution was raised while stirring, and when the temperature reached 120 °C, phosgene was started to be blown at a rate of 0.4 mol/hour, held for 10 hours, and then the temperature was raised to 150 °C. The suspension was almost dissolved. After cooling, the mixture was filtered, the dissolved phosgene and the solvent were distilled off under reduced pressure, and then vacuum distillation was performed to obtain 80.4 g of colorless and transparent LTI having a boiling point of 155 to 157 °C/0.022 mmHg. The NCO content of this product was 47.1% by weight.

### [Preparation example 11] Preparation of Block Polyisocyanate NTI-B

The inside of a four-necked flask equipped with a stirrer, thermometer, reflux condenser, and nitrogen-blowing tube was made into a nitrogen atmosphere, and10 g of NTI and 21.4 g of propylene glycol monomethyl ether acetate were charged therein, and the temperature inside the reaction vessel under was kept at 70 °C while stirring. 11.4 g of 3,5-dimethylpyrazole was added thereto to carry out the reaction for 60 minutes, and it was confirmed by infrared spectroscopy that the isocyanate absorption had disappeared, and blocked polyisocyanate NTI-B was obtained.

### [Preparation example 12] Preparation of blocked polyisocyanate LTI-B

The inside of a four-necked flask equipped with a stirrer, thermometer, reflux condenser, and nitrogen-blowing tube was made into a nitrogen atmosphere, and 10 g of LTI and 20.7 g of propylene glycol monomethyl ether acetate were charged therein, and the temperature inside the reaction vessel was kept at 70 °C while stirring. 10.7 g of 3,5-dimethylpyrazole was added thereto to carry out the reaction for 60 minutes, and it was confirmed by infrared spectroscopy that the isocyanate absorption had disappeared, and blocked polyisocyanate NTI-B was obtained.

### [Example A1] Preparation of coating film S-aA1

An aqueous coating composition was obtained by mixing 50.0 g of resin (C-1), 3.8 g of semicarbazide component (A-1) as a curing agent component, and 5.0 g of butyl cellosolve.

As an object to be coated, a JIS G 3141 (SPCC, SD) cationic electrodeposition coating plate was used, and spray-coated so as to have a dry film thickness of 35 µm, and then baked at 150 °C for 30 minutes to obtain a coating film S-aA1. The molar ratio A/(A+B) of the coating film S-aA1 was 1.0, the weight ratio A'/(A'+B') was 0, and the chipping resistance was Δ+.

### [Example A2] Preparation of coating film S-aA2

An aqueous coating composition was obtained by mixing 50.0 g of resin (C-1), 2.6 g of semicarbazide component (A-1) as a curing agent, 2.1 g of semicarbazide component (A-2), and 5.0 g of butyl cellosolve.

As an object to be coated, a JIS G 3141 (SPCC, SD) cationic electrodeposition coating plate was used, spray-coated so as to have a dry film thickness of 35 µm, and then baked at 150 °C for 30 minutes to obtain a coating film S-aA2. The molar ratio A/(A + B) of the coating film S-aA2 was 1.0, the weight ratio A'/(A'+B') was 0, and the chipping resistance was Δ.

### [Example A3] Preparation of coating film S-aA3

An aqueous coating composition was obtained by mixing 50.0 g of resin (C-1), 3.8 g of semicarbazide component (A-1) as a curing agent component,0.9 g of blocked polyisocyanate (B-1B), and 5.0 g of butyl cellosolve.

As an object to be coated, a JIS G 3141 (SPCC, SD) cationic electrodeposition coating plate was used, spray-coated so as to have a dry film thickness of 35 µm, and then baked at 150 °C for 30 minutes to obtain a coating film S-aA3. The molar ratio A/(A+B) of the coating film S-aA3 was 0.9, the weight ratio A'/(A'+B') was 0, and the chipping resistance was o.

### [Examples A4 to A12, Comparative Examples A1 to A4] Preparation of coating films S-aA4 to S-aA12 and S-bA1 to S-bA4

Coating films S-aA4 to S-aA12 and S-bA1 to S-bA4 were obtained in the same manner as in Example A1 except that the types and amounts of curing agent components used in the aqueous coating compositions were as shown in Table 1. Table 1 shows the values of the molar ratio A/(A+B) and the weight ratio A'/(A'+B') of the obtained coating films, and the evaluation results of chipping resistance. As the adipic acid dihydrazide, one diluted with water so as to have a solid content of 50% by mass was used.

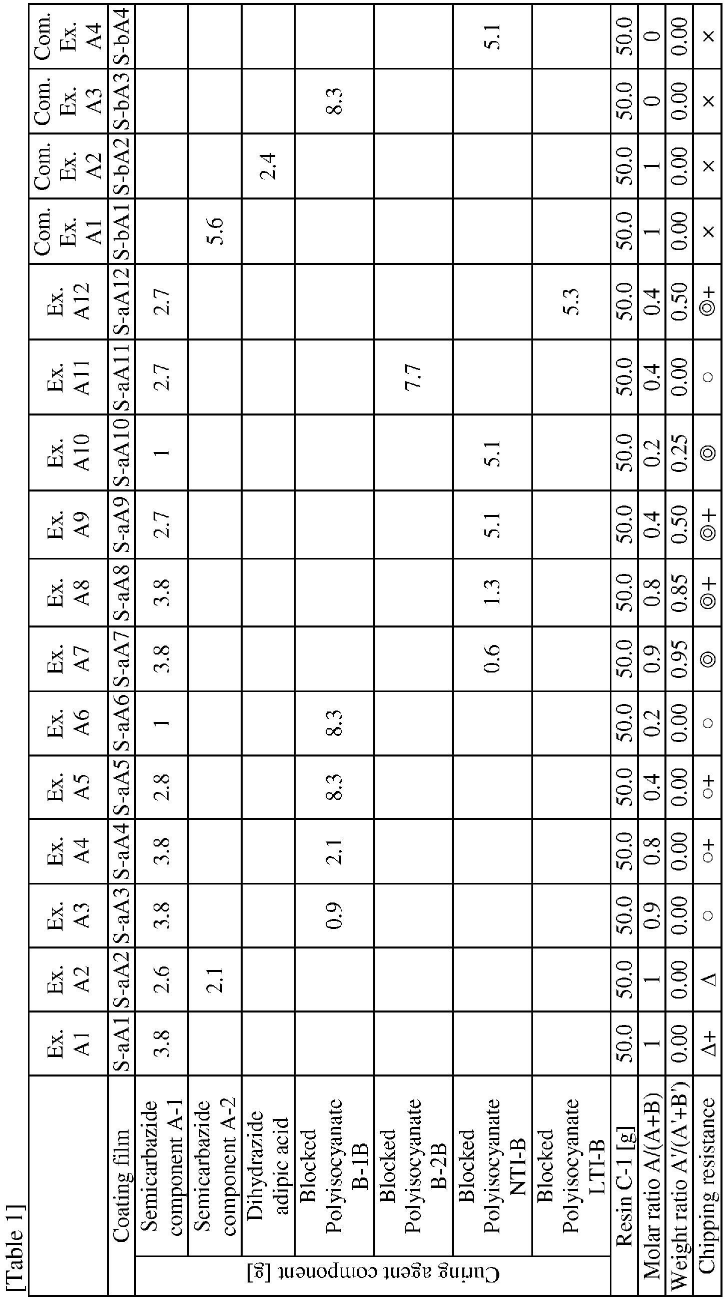

### [Example B1] Preparation of multilayer coating film S-aB1

### 1. Preparation of each coating composition

A first aqueous coating composition was obtained by mixing 50.0 g of resin (C-1), 3.8 g of semicarbazide component (A-1) as a curing agent component, and 5 g of butyl cellosolve.

Further, a second aqueous coating composition was obtained by mixing 10.7 g of melamine (trade name: "CYMEL 327", manufactured by Allnex), 50 g of acrylic dispersion (trade name: "SETAQUA6515", manufactured by Allnex), and 7.7 g of water.

Further, a clear coating composition was obtained by mixing 16.6 g of polyisocyanate (B-1), 50 g of acrylic polyol (trade name: "SETALUX1767", manufactured by Allnex), and 31.6 g of n-butyl acetate.

### 2. Preparation of multilayer coating film

As an object to be coated, a base material in which a hole with a diameter of 5 mm was previously formed in a JIS G 3141 (SPCC, SD) cationic electrodeposition coating plate or a white tile plate was used. A first aqueous coating composition was spray-coated so as to have a dry film thickness of 35 µm, and then a second aqueous coating composition was spray-coated so as to have a dry film thickness of 20 µm, followed by preheating at 80 °C for 5 minutes to form a coating film. The sagging resistance of the obtained coating film using a base material in which a hole with a diameter of 5 mm was previously formed in a JIS G 3141 (SPCC, SD) cationic electrodeposition coating plate was evaluated by the above-describe method. The evaluation result was 5.

Next, a white tile plate was used as an object to be coated. A first aqueous coating composition was spray-coated so as to have a dry film thickness of 35 µm, and then a second aqueous coating composition was spray-coated so as to a dry film thickness of 20 µm, followed by preheating at 80 °C for 5 minutes to form a coating film. A clear coating composition was then spray-coated on the formed first coating film and the second coating film so as to have a dry film thickness of 40 µm, followed by baking at 150 °C for 30 minutes to obtain a multilayer coating film S-aB 1. The baking-yellowing resistance of the obtained multilayer coating film S-aB 1 was evaluated by the above-described method. The evaluation result was ○.

Further, as an object to be coated, a JIS G 3141 (SPCC, SD) cationic electrodeposition coating plate was used, and a first aqueous coating composition was spray-coated so as to have a dry film thickness of 35 µm, and then a second aqueous coating was spray-coated so as to have a dry film thickness of 20 µm, followed by preheating at 80 °C for 5 minutes to form a coating film. A clear coating composition was then spray-coated on the formed first coating film and second coating film so as to have a dry film thickness of 40 µm, followed by baking at 150 °C for 30 minutes to obtain a multilayer coating film S-aB1. The molar ratio A/(A+B) of the first coating film of the coating film S-aB 1 was 0.9, the weight ratio A'/(A'+B') was 0, and the chipping resistance was Δ+.

### [Examples B2 to B15 and Comparative Examples B1 to B4] Preparation of multilayer coating films S-aB2 to S-aB 15 and S-bB 1 to S-bB4

Multilayer coating films S-aB2 to S-aB 15 and S-bB 1 to S-bB4 were obtained in the same manner as in Example B except that the types and amounts of the curing agent components of the first aqueous coating compositions were as shown in Table 2. Table 2 shows the values of the molar ratio A/(A+B) and the weight ratio A'/(A'+B') of the first coating film of each of the obtained multilayer coating films. In addition, the sagging resistance, baking-yellowing resistance, and chipping resistance of each of the obtained multilayer coating films were evaluated. The results are shown in Table 2. As the adipic acid dihydrazide, one diluted with water so as to have a solid content of 50% by mass was used.

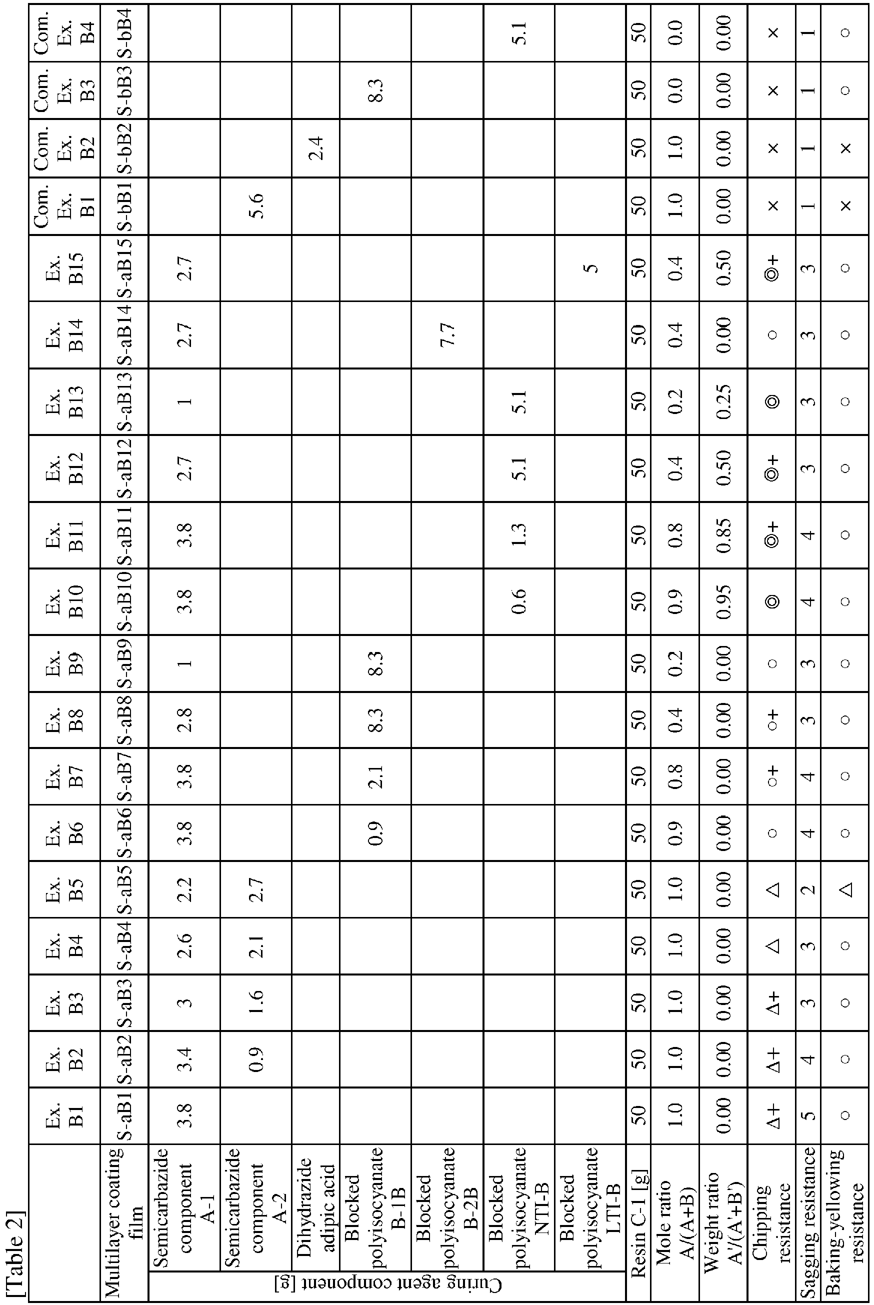

### [Example C1] Preparation of multilayer coating film S-aC1

### 1. Preparation of each coating composition

A first aqueous coating composition was obtained by mixing 10.7 g of melamine (trade name: "CYMEL 327", manufactured by Allnex), 50 g of acrylic dispersion (trade name: "SETAQUA6515", manufactured by Allnex), and 7.7 g of water.

Further, a second aqueous coating composition was obtained by mixing 50.0 g of resin (C-1), 3.8 g of semicarbazide component (A-1) as a curing agent component, and 5 g of butyl cellosolve.

Further, a clear coating composition was obtained by mixing 16.6 g of polyisocyanate (B-1), 50 g of acrylic polyol (trade name: "SETALUX1767", manufactured by Allnex), and 31.6 g of n-butyl acetate.

### 2. Preparation of multilayer coating film

As an object to be coated, a base material in which a hole with a diameter of 5 mm was previously formed in a JIS G 3141 (SPCC, SD) cationic electrodeposition coating plate or a white tile plate was used. A first aqueous coating composition was spray-coated so as to have a dry film thickness of 35 µm, and then a second aqueous coating composition was spray-coated so as to have a dry film thickness of 20 µm, followed by preheating at 80 °C for 5 minutes to form a coating film. The sagging resistance of the obtained coating film using a base material in which a hole with a diameter of 5 mm was previously formed in a JIS G 3141 (SPCC, SD) cationic electrodeposition coating plate was evaluated by the above-describe method. The evaluation result was 5.

Next, a white tile plate was used as an object to be coated. A first aqueous coating composition was spray-coated so as to have a dry film thickness of 35 µm, and then a second aqueous coating composition was spray-coated so as to a dry film thickness of 20 µm, followed by preheating at 80 °C for 5 minutes to form a coating film. A clear coating composition was then spray-coated on the formed first coating film and the second coating film so as to have a dry film thickness of 40 µm, followed by baking at 150 °C for 30 minutes to obtain a multilayer coating film S-aC1. The baking-yellowing resistance of the obtained multilayer coating film S-aC1 was evaluated by the above-described method. The evaluation result was ○.

Further, as an object to be coated, a JIS G 3141 (SPCC, SD) cationic electrodeposition coating plate was used, and a first aqueous coating composition was spray-coated so as to have a dry film thickness of 35 µm, and then a second aqueous coating was spray-coated so as to have a dry film thickness of 20 µm, followed by preheating at 80 °C for 5 minutes to form a coating film. A clear coating composition was then spray-coated on the formed first coating film and second coating film so as to have a dry film thickness of 40 µm, followed by baking at 150 °C for 30 minutes to obtain a multilayer coating film S-aC1. The molar ratio A/(A+B) of the second coating film of the coating film S-aC1 was 0.9, the weight ratio A'/(A'+B') was 0, and the chipping resistance was Δ+.

### Examples C2 to C15 and Comparative Examples C1 to C4] Preparation of multilayer coating films S-aC2 to S-aC15 and S-bC1 to S-bC4

Multilayer coating films S-aC2 to S-aC15 and S-bC1 to S-bC4 were obtained in the same manner as in Example C1 except that the types and amounts of the curing agent components of the second aqueous coating compositions were as shown in Table 3. Table 3 shows the values of the molar ratio A/(A+B) and the weight ratio A'/(A'+B') of the first coating film of each of the obtained multilayer coating films. In addition, the sagging resistance, baking-yellowing resistance, and chipping resistance of each of the obtained multilayer coating films were evaluated. The results are shown in Table 3. As the adipic acid dihydrazide, one diluted with water so as to have a solid content of 50% by mass was used.

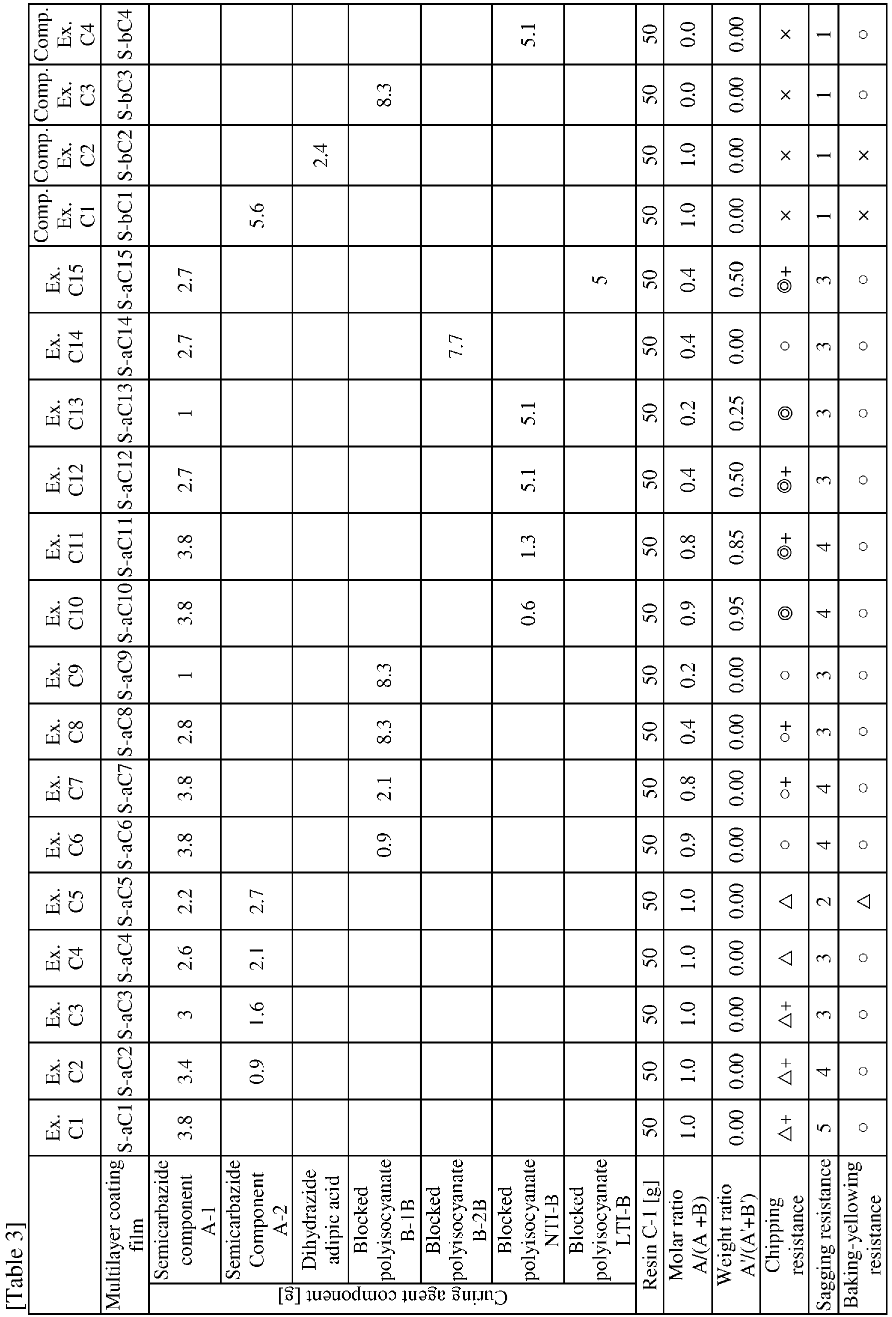

### [Example D1] Preparation of multilayer coating film S-aD1

### 1. Preparation of each coating composition

A first aqueous coating composition was obtained by mixing 50.0 g of resin (C-1), 3.8 g of semicarbazide component (A-1) as a curing agent component, and 5 g of butyl cellosolve.

Further, a second aqueous coating composition was obtained by mixing 50.0 g of the resin (C-1), 3.8 g of the semicarbazide component (A-1) as a curing agent component, and 5 g of butyl cellosolve.

Further, a clear coating composition was obtained by mixing 11.6 g of polyisocyanate (B-1), 10.5 g of polyisocyanate (B-2), 50 g of acrylic polyol (trade name: "SETALUX1767", manufactured by Allnex) and 31.6 g of n-butyl acetate.

### 2. Preparation of multilayer coating film

As an object to be coated, a base material in which a hole with a diameter of 5 mm was previously formed in a JIS G 3141 (SPCC, SD) cationic electrodeposition coating plate or a white tile plate was used. A first aqueous coating composition was spray-coated so as to have a dry film thickness of 35 µm, and then a second aqueous coating composition was spray-coated so as to have a dry film thickness of 20 µm, followed by preheating at 80 °C for 5 minutes to form a coating film. The sagging resistance of the obtained coating film using a base material in which a hole with a diameter of 5 mm was previously formed in a JIS G 3141 (SPCC, SD) cationic electrodeposition coating plate was evaluated by the above-describe method. The evaluation result was 5.

Next, a white tile plate was used as an object to be coated. A first aqueous coating composition was spray-coated so as to have a dry film thickness of 35 µm, and then a second aqueous coating composition was spray-coated so as to a dry film thickness of 20 µm, followed by preheating at 80 °C for 5 minutes to form a coating film. A clear coating composition was then spray-coated on the formed first coating film and the second coating film so as to have a dry film thickness of 40 µm, followed by baking at 150 °C for 30 minutes to obtain a multilayer coating film S-aD1. The baking-yellowing resistance of the obtained multilayer coating film S-aD1 was evaluated by the above-described method. The evaluation result was ○.

Further, as an object to be coated, a JIS G 3141 (SPCC, SD) cationic electrodeposition coating plate was used, and a first aqueous coating composition was spray-coated so as to have a dry film thickness of 35 µm, and then a second aqueous coating was spray-coated so as to have a dry film thickness of 20 µm, followed by preheating at 80 °C for 5 minutes to form a coating film. A clear coating composition was then spray-coated on the formed first coating film and second coating film so as to have a dry film thickness of 40 µm, followed by baking at 150 °C for 30 minutes to obtain a multilayer coating film S-aD1. The molar ratio A/(A+B) of the first and second coating film of the coating film S-aD1 was 0.8, the weight ratio A'/(A'+B') was 0, and the chipping resistance was ○+.

### [Example D2] Preparation of multilayer coating film S-aD2

A multilayer coating film S-aD2 was obtained in the same manner as in Example D1 except that the type and amount of the curing agent component used in the clear coating composition was as shown in Table 4. Table 7 shows the values of the molar ratio A/(A+B) and the weight ratio A'/(A'+B') of the first and second coating film of the obtained multilayer coating film S-aD2. In addition, the sagging resistance, baking-yellowing resistance and chipping resistance of the obtained multilayer coating films was evaluated. The results are shown in Table 4.

### [Example D3] Preparation of multilayer coating film S-aD3

### 1. Preparation of each coating composition

A first aqueous coating composition was obtained by mixing 50.0 g of resin (C-1), 3.8 g of semicarbazide component (A-1) as a curing agent component, and 5 g of butyl cellosolve.

Further, a second aqueous coating composition was obtained by mixing 10.7 g of melamine (trade name: "CYMEL 327", manufactured by Allnex), 50 g of acrylic dispersion (trade name: "SETAQUA6515", manufactured by Allnex), and 7.7 g of water.

Further, a clear coating composition was obtained by mixing 11.6 g of polyisocyanate (B-1), 10.5 g of polyisocyanate (B-2), 50 g of acrylic polyol (trade name: "SETALUX1767", manufactured by Allnex) and 31.6 g of n-butyl acetate.

### 2. Preparation of multilayer coating film

As an object to be coated, a base material in which a hole with a diameter of 5 mm was previously formed in a JIS G 3141 (SPCC, SD) cationic electrodeposition coating plate or a white tile plate was used. A first aqueous coating composition was spray-coated so as to have a dry film thickness of 35 µm, and then a second aqueous coating composition was spray-coated so as to have a dry film thickness of 20 µm, followed by preheating at 80 °C for 5 minutes to form a coating film. The sagging resistance of the obtained coating film using a base material in which a hole with a diameter of 5 mm was previously formed in a JIS G 3141 (SPCC, SD) cationic electrodeposition coating plate was evaluated by the above-describe method. The evaluation result was 5.

Next, a white tile plate was used as an object to be coated. A first aqueous coating composition was spray-coated so as to have a dry film thickness of 35 µm, and then a second aqueous coating composition was spray-coated so as to a dry film thickness of 20 µm, followed by preheating at 80 °C for 5 minutes to form a coating film. A clear coating composition was then spray-coated on the formed first coating film and the second coating film so as to have a dry film thickness of 40 µm, followed by baking at 150 °C for 30 minutes to obtain a multilayer coating film S-aD3. The baking-yellowing resistance of the obtained multilayer coating film S-aD3 was evaluated by the above-described method. The evaluation result was o.

Further, as an object to be coated, a JIS G 3141 (SPCC, SD) cationic electrodeposition coating plate was used, and a first aqueous coating composition was spray-coated so as to have a dry film thickness of 35 µm, and then a second aqueous coating was spray-coated so as to have a dry film thickness of 20 µm, followed by preheating at 80 °C for 5 minutes to form a coating film. A clear coating composition was then spray-coated on the formed first coating film and second coating film so as to have a dry film thickness of 40 µm, followed by baking at 150 °C for 30 minutes to obtain a multilayer coating film S-aD3. The molar ratio A/(A+B) of the first coating film of the coating film S-aD3 was 0.9, the weight ratio A'/(A'+B') was 0, and the chipping resistance was o.

### [Example D4] Preparation of multilayer coating film S-aD4

Multilayer coating film S-aD4 was obtained in the same manner as in Example D3 except that the type and amount of the curing agent component of the clear aqueous coating composition was as shown in Table 4. Table 7 shows the values of the molar ratio A/(A+B) and the weight ratio A'/(A'+B') of the first coating film of the obtained multilayer coating film S-aD4. In addition, the sagging resistance, baking-yellowing resistance, and chipping resistance of the obtained multilayer coating film was evaluated. The results are shown in Table 4.

### [Example D5] Preparation of multilayer coating film S-aD5

### 1. Preparation of each coating composition

A first aqueous coating composition was obtained by mixing 10.7 g of melamine (trade name: "CYMEL 327", manufactured by Allnex), 50 g of acrylic dispersion (trade name: "SETAQUA6515", manufactured by Allnex), and 7.7 g of water.

Further, a second aqueous coating composition was obtained by mixing 50.0 g of the resin (C-1), 3.8 g of the semicarbazide component (A-1) as a curing agent component, and 5 g of butyl cellosolve.

Further, a clear coating composition was obtained by mixing 11.6 g of polyisocyanate (B-1), 10.5 g of polyisocyanate (B-2), 50 g of acrylic polyol (trade name: "SETALUX1767", manufactured by Allnex) and 31.6 g of n-butyl acetate.

### 2. Preparation of multilayer coating film

As an object to be coated, a base material in which a hole with a diameter of 5 mm was previously formed in a JIS G 3141 (SPCC, SD) cationic electrodeposition coating plate or a white tile plate was used. A first aqueous coating composition was spray-coated so as to have a dry film thickness of 35 µm, and then a second aqueous coating composition was spray-coated so as to have a dry film thickness of 20 µm, followed by preheating at 80 °C for 5 minutes to form a coating film. The sagging resistance of the obtained coating film using a base material in which a hole with a diameter of 5 mm was previously formed in a JIS G 3141 (SPCC, SD) cationic electrodeposition coating plate was evaluated by the above-describe method. The evaluation result was 5.

Next, a white tile plate was used as an object to be coated. A first aqueous coating composition was spray-coated so as to have a dry film thickness of 35 µm, and then a second aqueous coating composition was spray-coated so as to a dry film thickness of 20 µm, followed by preheating at 80 °C for 5 minutes to form a coating film. A clear coating composition was then spray-coated on the formed first coating film and the second coating film so as to have a dry film thickness of 40 µm, followed by baking at 150 °C for 30 minutes to obtain a multilayer coating film S-aD5. The baking-yellowing resistance of the obtained multilayer coating film S-aD5 was evaluated by the above-described method. The evaluation result was ○.

Further, as an object to be coated, a JIS G 3141 (SPCC, SD) cationic electrodeposition coating plate was used, and a first aqueous coating composition was spray-coated so as to have a dry film thickness of 35 µm, and then a second aqueous coating was spray-coated so as to have a dry film thickness of 20 µm, followed by preheating at 80 °C for 5 minutes to form a coating film. A clear coating composition was then spray-coated on the formed first coating film and second coating film so as to have a dry film thickness of 40 µm, followed by baking at 150 °C for 30 minutes to obtain a multilayer coating film S-aD5. The molar ratio A/(A+B) of the first coating film of the coating film S-aD5 was 0.8, the weight ratio A'/(A'+B') was 0, and the chipping resistance was ○+.

### [Example D6] Preparation of multilayer coating film S-aD6

A multilayer coating film S-aD6 was obtained in the same manner as in Example D5 except that the types and amounts of the curing agent components used in the clear coating composition were as shown in Table 4. Table 7 shows the values of the molar ratio A/(A+B) and the weight ratio A'/(A'+B') of the first coating films of the obtained multilayer coating film S-aD6. In addition, the sagging resistance, baking-yellowing resistance and chipping resistance of the obtained multilayer coating film was evaluated. The results are shown in Table 4.

**[Table 4]**

| | | Ex. D1 | Ex. D2 | Ex. D3 | Ex. D4 | Ex. D5 | Ex. D6 |
|---|---|---|---|---|---|---|---|
| Multilayer coating film | | S-aD1 | S-aD2 | S-aD3 | S-aD4 | S-aD5 | S-aD6 |
| First coating film | Semicarbazide component A-1 [g] | 3.8 | 3.8 | 3.8 | 3.8 | | |
| | Resin C-1 [g] | 50 | 50 | 50 | 50 | - | - |
| Second coating film | Semicarbazide component A-1 [g] | 3.8 | 3.8 | - | - | 3.8 | 3.8 |
| | Resin C-1 [g] | 50 | 50 | - | - | 50 | 50 |
| Clear coating film | Polyisocyanate B-1 | 11.6 | 11.6 | 11.6 | 11.6 | 11.6 | 11.6 |
| | Polyisocyanate B-2 | 10.5 | - | 10.5 | - | 10.5 | - |
| | NTI [g] | - | 5 | - | 5 | - | 5 |
| | SETALUX 1767 [g] | 50 | 50 | 50 | 50 | 50 | 50 |
| Mole ratio A/(A+B) | | 0.8 | 0.7 | 0.9 | 0.7 | 0.8 | 0.7 |
| Weight ratio A'/(A'+B') | | 0.00 | 0.80 | 0.00 | 0.80 | 0.00 | 0.80 |
| Chipping resistance | | ○+ | ⊚+ | ○ | ⊚+ | ○+ | ⊚+ |
| Sagging resistance | | 5 | 5 | 5 | 5 | 5 | 5 |
| Baking-yellowing resistance | | ○ | ○ | ○ | ○ | ○ | ○ |

As shown in Table 1, all of the coating films S-aA1 to S-aA12 (Examples A1 to A12) using the curing agent component containing semicarbazide compound (I) showed good chipping resistance. Among them, the chipping resistance of Examples A3 to A12 was excellent, and in particular, Examples A7 to A10 and A12 were even better.

On the other hand, the coating films S-bA1 to S-bA4 (Comparative Examples A1 to A4) not containing semicarbazide compound (I) were inferior in chipping resistance.

As shown in Table 2, all of the multilayer coating films S-aB1 to S-aB15 (Examples B1 to B15) using the curing agent component containing semicarbazide compound (I) showed good baking-yellowing resistance. In addition, Example B1 showed better sagging resistance. Further, chipping resistance of Examples B6 to B15 was excellent, and in particular, Examples B10 to B13 and B15 were even better.

On the other hand, the coating films S-b B 1 to S-b B 4 (Comparative Examples B 1 to B 4) not containing semicarbazide compound (1) were inferior in baking-yellowing resistance, sagging resistance, and chipping resistance.

As shown in Table 3, all of the multilayer coating films S-aC1 to S-aC15 (Examples C1 to C15) using the curing agent component containing semicarbazide compound (1) showed good baking-yellowing resistance. In addition, Example C1 showed better sagging resistance. Further, chipping resistance of Examples C6 to C15 was excellent, and in particular, Examples C10 to C13 and C15 were even better.

On the other hand, the coating films S-bC1 to S-bC4 (Comparative Examples C1 to C4) not containing semicarbazide compound (I) were inferior in baking-yellowing resistance, sagging resistance, and chipping resistance.

As shown in Table 4, the multilayer coating films S-aD1 to SaD6 (Examples D1 to D6) using polyisocyanate B-1, polyisocyanate B-2, and NTI as the clear coating film showed excellent baking-yellowing resistance, sagging resistance and chipping resistance.

### INDUSTRIAL APPLICABILITY

According to the multilayer coating film of the present embodiment and the method for producing the same, it is possible to obtain a multilayer coating film including a coating film having excellent sagging resistance and yellowing resistance at the time of baking. The coating film contained in the multilayer coating film of the present embodiment has, for example, weather resistance, acid resistance, rust preventive ability, chipping resistance and the like.

## Claims

1. A coating film comprising a structure represented by formula (1)-1.

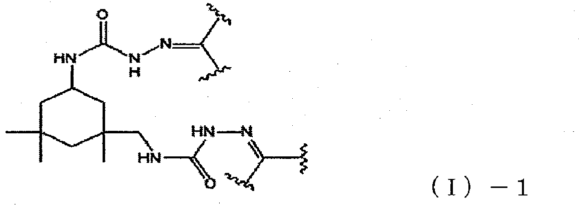

2. The coating film according to claim 1, further comprising a structure represented by formula (II)-1.

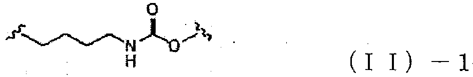

3. The coating film according to claim 2, wherein a molar ratio between a carbonyl group (A) in the structure represented by formula (I)-1 and a carbonyl group (B) in the structure represented by formula (II)-1 is A/(A+B) = 0.2 to 0.9.

4. The coating film according to claim 2 or 3, wherein the structure represented by formula (II)-1 is a structure represented by formula (II)-2, 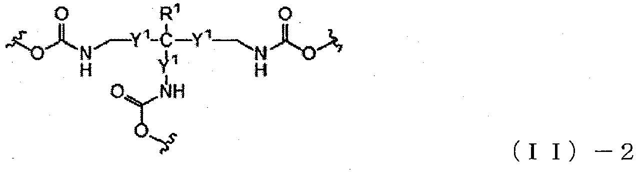 [in formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group].

5. The coating film according to claim 4, wherein a weight ratio between a structure (A') represented by formula (I)-1 and a structure (B') represented by formula (II)-2 is A'/(A'+ B') = 0.2 to 1.0 in terms of the compound represented by formula (I) and the compound represented by formula (II), 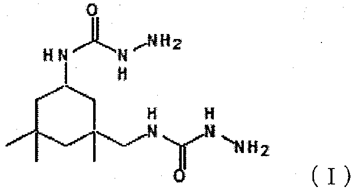 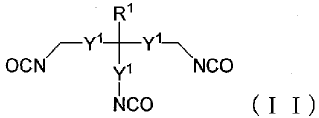 [in formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group].

6. A multilayer coating film, comprising a first coating film, a second coating film and a clear coating film which are laminated on an object to be coated, wherein
the first coating film is a coating film obtained by curing a first aqueous coating composition,
the second coating film is a coating film obtained by curing a second aqueous coating composition,
the clear coating film is a coating film obtained by curing a clear coating composition, and
at least one layer selected from the group consisting of the first coating film and the second coating film is the coating film defined in any one of claims 1 to 5.

7. The multilayer coating film according to claim 6, wherein the clear coating film has a structure represented by formula (II)-2, 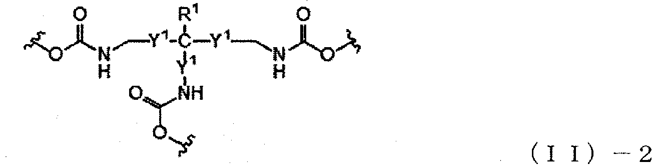 [in formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group].

8. An article comprising the multilayer coating film defined in claim 6 or 7.

9. A method for producing a multilayer coating film, comprising
step 1 of applying the first aqueous coating composition on a surface of an object to be coated to form a first coating film,
step 2 of applying a second aqueous coating composition on the first coating film to form a second coating film,
step 3 of applying a clear coating composition on the second coating film to form a clear coating film, and
step 4 of simultaneously baking the first coating film, the second coating film, and the clear coating film formed on the object to be coated, in this order, wherein
at least one aqueous coating composition selected from the group consisting of the first aqueous coating composition and the second aqueous coating composition contains a semicarbazide compound represented by formula (I).

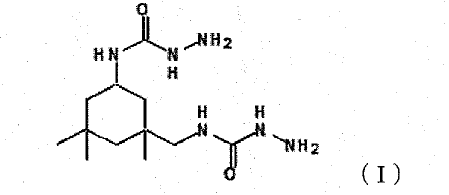

10. The method according to claim 9, wherein at least one aqueous coating composition selected from the group consisting of the first aqueous coating composition and the second aqueous coating composition further contains a resin having a carbonyl group.

11. The method according to claim 9 or 10, wherein said at least one aqueous coating composition selected from the group consisting of the first aqueous coating composition and the second aqueous coating composition contains a triisocyanate compound represented by formula (II), 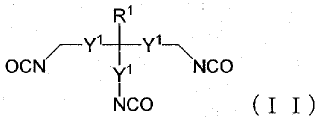 [in formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group].

12. The method according to claim 9 or 10, wherein said at least one aqueous coating composition selected from the group consisting of the first aqueous coating composition and the second aqueous coating composition contains a polyisocyanate compound.

13. The method according to claim 9 or 10, wherein the clear coating composition contains the triisocyanate compound represented by formula (II), 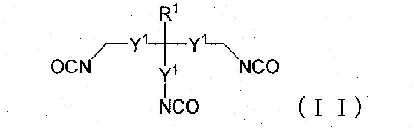 [in formula (II), a plurality of Y¹ are each independently a single bond or a divalent C1-20 hydrocarbon group optionally having an ester structure and/or an ether structure, the plurality of Y¹ may be the same or different, and R¹ is a hydrogen atom or a monovalent C1-12 hydrocarbon group].

14. The method according to claim 9 or 10, wherein the clear coating composition contains a polyisocyanate compound.
